# EUROPEAN PATENT APPLICATION

(11) **EP 3 862 932 A1**
(43) Date of publication of application: **11.08.2021**
(21) Application number: 20215486.0
(22) Date of filing: 18.12.2020
(51) Int. Cl.: G06N 3/08, G06F 9/30

(54) **ARITHMETIC PROCESSING DEVICE, ARITHMETIC PROCESSING METHOD, AND ARITHMETIC PROCESSING PROGRAM**

(30) Priority: 04.02.2020 JP 2020016735
(71) Applicant: FUJITSU LIMITED, Kanagawa 211-8588 (JP)
(72) Inventor: Ge, Yi, Kanagawa, 211-8588 (JP); Yoda, Katsuhiro, Kanagawa, 211-8588 (JP); Ito, Makiko, Kanagawa, 211-8588 (JP)
(74) Representative: Hoffmann Eitle

(57) **Abstract**

An arithmetic processing device includes an operation unit, a manager, a decimal point position determiner, and an index value conversion controller. The operation unit configured to execute a predetermined operation. The manager configured to calculate statistical information of a first operation result by causing to execute the predetermined operation using input data as a first fixed-point number with a first decimal point at a first decimal point position. The decimal point position determiner configured to determine a second decimal point position using the statistical information. The index value conversion controller configured to causes the operation unit to calculate a second operation result when the predetermined operation is executed using the input data as a second fixed-point number with a second decimal point at the second decimal point position.

## Description

### [Technical Field]

The embodiments discussed herein are related to an arithmetic processing device, an arithmetic processing method, and an arithmetic processing program.

### [Background Art]

Recently, the demand for deep learning is increasing. In the deep learning, various operations including multiplication, a product-sum operation, and vector multiplication are executed. In the deep learning, requests for the accuracy of individual operations are not as strict as other computer processing. For example, for existing signal processing or the like, a programmer develops a computer program while avoiding digit overflow as much as possible. On the other hand, in the deep learning, a large value is accepted to be saturated to some extent. This is due to the fact that, in the deep learning, the adjustment of a coefficient (weight) to be used to execute a convolution operation on a plurality of input data items is a main process, and an input data item that is among the input data items and largely different from the other input data items is not treated as an important data item in many cases. This is due to the fact that, since a large amount of data is repeatedly used to adjust the coefficient, digits of a value saturated once are adjusted based on the progress of the learning so that the value is not saturated and is reflected in the adjustment of the coefficient.

To reduce the area of a chip of an arithmetic processing device for the deep learning and improve power performance and the like in consideration of such characteristics of the deep learning, an operation is considered to be executed using a fixed-point number without using a floating-point number. This is due to the fact that a circuit configuration for executing an operation using the fixed-point number is simpler than a circuit configuration for executing an operation using the floating-point number.

In recent years, dedicated accelerators for deep learning have been actively developed. It is preferable that an operation to be executed using a fixed-point number be used to improve an area efficiency for an operation to be executed in a dedicated accelerator. For example, hardware has been developed, in which the number of operation bits, for example, a 32-bit floating-point number is reduced to an 8-bit fixed-point number to improve operation performance per area. By reducing the 32-bit floating-point number to the 8-bit fixed-point number, it is possible to simply obtain performance per area that is 4 times that when the 32-bit floating-point number is used. A process of representing a sufficiently accurate actual number using a small number of bits is referred to as quantization.

However, since a dynamic range of a fixed-point number is small, the accuracy of executing an operation using the fixed-point number is lower than that of executing an operation using a floating-point number in some cases. Therefore, even in deep learning, the accuracy of representing a small value, for example, the number of significant digits is requested to be considered. There is a technique for determining the number of significant digits of a fixed-point number using statistical information of the positions of bits of an operation result and optimizing a decimal point position.

In the prior art, statistical information of a previous iteration is used to determine a decimal point position for a next iteration, and an operation of the next iteration is executed using the determined decimal point position. An iteration is also referred to as a mini-batch.

As a technique for determining a decimal point position of a fixed-point number using statistical information, there is a prior art for determining a decimal point position using information indicating a range from the position of the least significant bit to the position of the most significant bit and information indicating a range from the position of a sign bit to the position of the least significant bit. As a technique for executing a fixed-point operation, there is a prior art for executing a rounding process and a saturation process on an operation result output based on data indicating a specified decimal point position and executing a fixed-point operation.

### [Citation List]

### [Patent Literature]

[PTL 1] Japanese Laid-open Patent Publication No. 2018-124681
[PTL 2] Japanese Laid-open Patent Publication No. 2019-74951
[PTL 3] Japanese Laid-open Patent Publication No. 2009-271598

### [Summary of Invention]

### [Technical Problem]

However, the number of cases where a processing scheme that is referred to as Define-by-Run is introduced in a recent deep learning framework, for example, pyTorch or chainer, has increased. Hereinafter, Define-by-Run is abbreviated as DbR. In DbR, a computational graph serving as the structure of a neural network is built, while a deep learning process is executed. In DbR, the computational graph changes for each of iterations of learning in the earliest case. It is, therefore, difficult to store a decimal point position estimated in the past. The change in the computational graph indicates that a plurality of computational graphs exist when an operation is progressed via a certain layer and that it is difficult to identify any of the computational graphs that is to be used for the certain layer in a specific iteration. Arithmetic processing that is executed in existing deep learning and is not DbR is referred to as Define-and-Run, and a computational graph is identified at the time of the start of the learning.

When deep learning is executed using DbR, even when statistical information on a previous iteration is used, the previous iteration does not exist in some cases or the statistical information on the previous iteration is information on an iteration preceding a current iteration by many iterations in some cases. Therefore, when the deep learning is executed using DbR, and past statistical information is used, the learning may fail and it is difficult to determine a decimal point position using the past statistical information.

Even in the technique for determining a decimal point position using information indicating a range from the position of the least significant bit to the position of the most significant bit and information indicating a range from the position of a sign bit to the position of the least significant bit, past statistical information is used. It is therefore difficult to apply the technique to deep learning using DbR. In the prior art for executing the rounding process and the saturation process on an operation result output based on data indicating a specified decimal point position, how to determine the decimal point position is not considered and it is difficult to execute deep learning using DbR.

The techniques disclosed herein have been devised under the foregoing circumstances. The techniques disclosed herein aim to provide an arithmetic processing device, a method for controlling the arithmetic processing device, and an arithmetic processing program that improve the accuracy of learning using a fixed decimal point when the deep learning is executed using Define-by-Run.

### [Solution to Problem]

In one aspect of the arithmetic processing unit, the control method of the arithmetic processing unit, and the arithmetic processing program disclosed in the present application, an operation section that executes a predetermined operation. Further, a manager that causes the operation section to execute the predetermined operation using input data as a fixed-point number with a decimal point at a first decimal point position and calculates statistical information of a first operation result. Further, a decimal point position determiner that uses the statistical information to determine a second decimal point position. Further, an index value conversion controller that causes the operation section to calculate a second operation result when the predetermined operation is executed using the input data as a fixed-point number with a decimal point at the second decimal point position determined by the decimal point position determiner.

### [Effects of Invention]

According to one aspect, the invention may improve the accuracy of learning using a fixed decimal point when the deep learning is executed using Define-by-Run.

### [Brief Description of Drawings]

FIG. 1 is a configuration diagram illustrating an overview of a server;
FIG. 2 is a diagram of an example of deep learning in a neural network;
FIG. 3 is a block diagram of an operation circuit;
FIG. 4 is a block diagram illustrating details of a controller;
FIG. 5 is a diagram describing an entire process of updating a decimal point position according to Embodiment 1;
FIG. 6 is a diagram illustrating an overview of an operation process including an update to a decimal point position by the operation circuit according to Embodiment 1;
FIG. 7 is a flowchart of a deep learning process by the operation circuit according to Embodiment 1;
FIG. 8 is a diagram describing an entire process of updating a decimal point position according to Embodiment 2;
FIG. 9 is a diagram describing the selection of N% operation data;
FIG. 10 is a diagram illustrating the ratio of an operation data item selected based on a selected recognition rate;
FIG. 11 is a diagram describing an entire process of updating a decimal point position according to Embodiment 3;
FIG. 12 is a flowchart of a deep learning process by an operation circuit according to Embodiment 3.
FIG. 13 is a diagram describing an entire process of updating a decimal point position according to Embodiment 4;
FIG. 14 is a diagram illustrating an overview of an operation process including an update to a decimal point position by an operation circuit according to Embodiment 4;
FIG. 15 is a diagram illustrating time periods for executing operation processes according to Embodiments 1 to 4;
FIG. 16 is a diagram illustrating an example of layers in deep learning;
FIG. 17 is a diagram illustrating results of selecting a method for updating a decimal point position;
FIG. 18 is a flowchart of the selection of a process of updating a decimal point position according to Embodiment 5;
FIG. 19 is a diagram illustrating the timing of selecting a method for updating a decimal point position;
FIG. 20 is a diagram illustrating an example of configurations of servers including calculation circuits;
FIG. 21 is a diagram describing an operation procedure according to Embodiment 6;
FIG. 22A is a flowchart of an operation process in a deep learning by a server according to Embodiment 6;
FIG. 22B is a flowchart of an operation process in a deep learning by a server according to Embodiment 6;
FIG. 23 is a diagram describing an operation procedure according to Embodiment 7;
FIG. 24 is a diagram describing an operation procedure according to Embodiment 8;
FIG. 25A is a flowchart of an operation process in deep learning by a server according to Embodiment 8;
FIG. 25B is a flowchart of an operation process in deep learning by a server according to Embodiment 8; and
FIG. 26 is a diagram describing an operation procedure according to Embodiment 9.

### [Description of Embodiments]

Hereinafter, embodiments of an arithmetic processing device disclosed herein, a method, disclosed herein, for controlling the arithmetic processing device, and an arithmetic processing program disclosed herein are described in detail based on the drawings. The arithmetic processing device disclosed herein, the method, disclosed herein, for controlling the arithmetic processing device, and the arithmetic processing program disclosed herein are not limited by the following embodiments.

### [Embodiment 1]

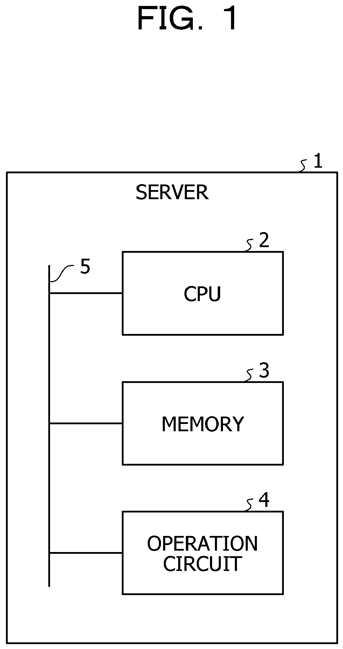

FIG. 1 is a configuration diagram illustrating an overview of a server. The server 1 executes deep learning. The server 1 includes a central processing unit (CPU) 2, a memory 3, and an operation circuit 4. The CPU 2, the memory 3, and the operation circuit 4 are coupled to each other via a Peripheral Component Interconnect Express (PCIe) bus 5.

The CPU 2 executes a program stored in the memory 3 and achieves various functions as the server 1. For example, the CPU 2 transmits a control signal via the PCIe bus 5 and activates a control core included in the operation circuit 4. The CPU 2 outputs, to the operation circuit 4, data to be used for an operation and an instruction to execute the operation and causes the operation circuit 4 to execute the operation.

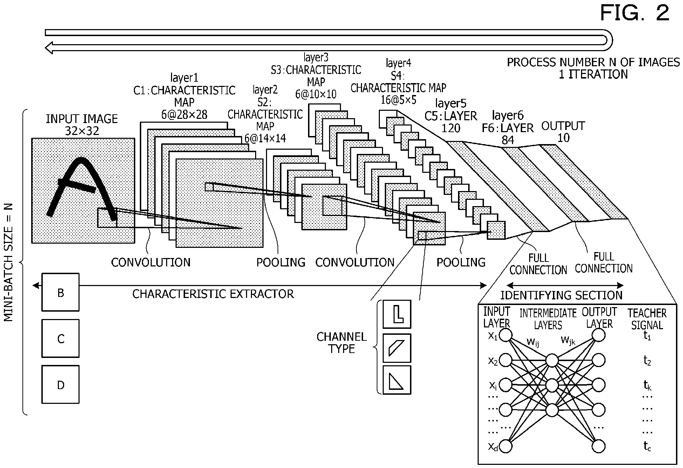

The operation circuit 4 is a circuit that executes an operation of each of layers in the deep learning. An example of the deep learning in a neural network is described with reference to FIG. 2. FIG. 2 is a diagram of an example of the deep learning in the neural network. For example, the neural network executes a process in a forward direction to recognize and identify an image and executes a process in a backward direction to determine a parameter to be used for the process in the forward direction. A direction toward the right side of a paper sheet of FIG. 2 is indicated by an arrow illustrated in an upper part of FIG. 2 and is the forward direction, while a direction toward the left side of the paper sheet is the backward direction.

The neural network illustrated in FIG. 2 executes a convolution layer process and a pooling layer process on an input image, extracts a characteristic of the image, and identifies the image. A process illustrated in a central part of the paper sheet of FIG. 2 indicates the process in the forward direction.

In FIG. 2, in the process in the forward direction, a characteristic extractor executes the convolution layer process and the pooling layer process on the input image and generates a characteristic map. After that, an identifying section executes full connection on the characteristic map and outputs a result of the identification from an output layer. The convolution layer process is also referred to as a convolution operation. The pooling layer process is also referred to as a pooling operation. The result of the identification is compared with correct data, and a differential value that is the result of the comparison is obtained. Next, as the process in the backward direction, a learning process is executed to calculate an error in the forward direction in each of a convolution layer and a fully connected layer from the differential value and calculate a next weight for each of the layers.

The deep learning is sectioned into process units and executed. The process units are referred to as mini-batches. A mini-batch is a combination of a plurality of data items obtained by dividing a set of the input data to be subjected to the learning into a predetermined number of groups. In FIG. 2, a number N of images form one mini-batch. A unit of the series of processes in the forward and backward directions on each mini-batch is referred to as an iteration.

The operation circuit 4 executes operations of the layers in each of a predetermined number of mini-batches in the deep learning, acquires and accumulates statistical information of variables of the layers, and automatically adjusts fixed decimal point positions of the variables used for the deep learning. Next, the operation circuit 4 is described in detail.

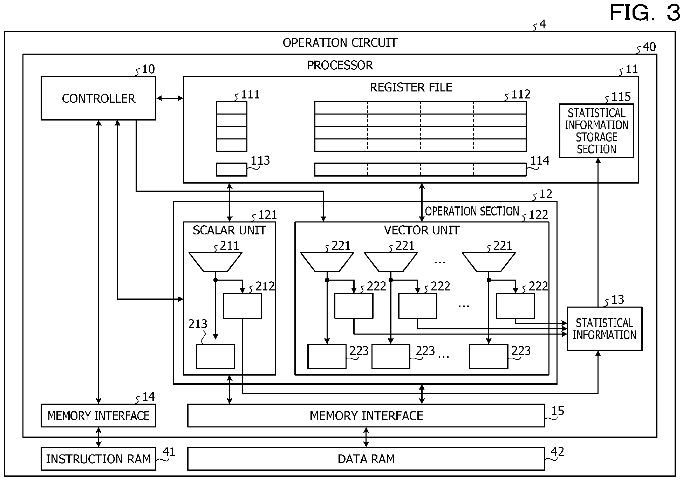

FIG. 3 is a block diagram of the operation circuit. As illustrated in FIG. 3, the operation circuit 4 includes a processor 40, an instruction random-access memory (RAM) 41, and a data RAM 42.

The processor 40 includes a controller 10, a register file 11, an operation section 12, a statistical information aggregator 13, a memory interface 14, and a memory interface 15. The memory interface 14 couples the processor 40 to the instruction RAM 41. The memory interface 15 couples the processor 40 to the data RAM 42. In the following description, a description of the memory interfaces 14 and 15 between the sections of the processor 40 and the RAMs 41 and 42 is omitted from descriptions of access by each of the sections of the processor 40 to the instruction RAM 41 or the data RAM 42.

The instruction RAM 41 is a storage device for storing an instruction transmitted from the CPU 2. The instruction stored in the instruction RAM 41 is fetched and executed by the controller 10. The data RAM 42 is a storage device for storing data to be used to execute an operation specified by the instruction. The data stored in the data RAM 42 is used for the operation executed by the operation section 12.

The register file 11 includes a scalar register file 111, a vector register file 112, an accumulator register 113, a vector accumulator register 114, and a statistical information storage section 115.

The scalar register file 111 and the vector register file 112 store data to be used for an operation. The data is input data, data during the execution of the learning process, and the like. The accumulator register 113 and the vector accumulator register 114 temporarily store data when the operation section 12 executes an operation, such as accumulation.

The statistical information storage section 115 acquires and stores statistical information aggregated by the statistical information aggregator 13. The statistical information is information on a decimal point position of an operation result. For example, the statistical information is any or a combination of a distribution of unsigned most significant bit positions, a distribution of non-zero least significant bit positions, and a plurality of information items including the maximum value among the unsigned most significant bit positions, the minimum value among the non-zero least significant bit positions, or the like.

Next, the operation section 12 is described. The operation section 12 includes a scalar unit 121 and a vector unit 122.

The scalar unit 121 is coupled to the controller 10, the register file 11, and the memory interface 15. The scalar unit 121 includes an operator 211, a statistical information acquirer 212, and a data converter 213. In the present embodiment, the scalar unit 121 executes two operations, the preceding operation of acquiring statistical information and a main operation of executing an operation using a decimal point position determined based on the statistical information of the preceding operation to obtain an operation result.

The operator 211 uses one or some of data items held in the data RAM 42, the scalar register file 111, and the accumulator register 113 to execute an operation, such as a product-sum operation. The one or some data items used by the operator 211 for the operation is or are an example of "input data". The operation to be executed by the operator 211 in the preceding operation is the same as or similar to an operation to be executed by the operator 211 in the main operation. The operator 211 executes the operations using a bit width sufficient to represent operation results. The operator 211 outputs the operation results to the data RAM 42, the statistical information acquirer 212, and the data converter 213.

The statistical information acquirer 212 receives input of data of the operation results from the operator 211. The statistical information acquirer 212 acquires the statistical information from the data of the operation results. The statistical information acquirer 212 outputs the acquired statistical information to the statistical information aggregator 13. However, in the main operation, the statistical information acquirer 212 may not acquire the statistical information and may not output the acquired statistical information.

The data converter 213 acquires the operation results obtained by the operator 211. Next, in the main operation, the data converter 213 receives, from the controller 10, input of the decimal point position determined based on the statistical information acquired in the preceding operation. The data converter 213 shifts fixed-point number data by a shift amount specified by the received decimal point position. The data converter 213 executes a saturation process on an upper bit and a rounding process on a lower bit, together with the shifting. By executing this, the data converter 213 updates the decimal point position of the fixed-point number data. In the preceding operation, the data converter 213 may not update the decimal point position. The data converter 213 causes an operation result indicating the updated decimal point position to be stored in the scalar register file 111 and the data RAM 42. The process to be executed by the operator 211 and the data converter 213 on the input data is an example of a "predetermined operation".

The vector unit 122 is coupled to the controller 10, the register file 11, and the memory interface 15. The vector unit 122 includes a plurality of combinations of operators 221, statistical information acquirers 222, and data converter 223. In the present embodiment, the vector unit 122 also executes the two operations, the preceding operation and the main operation.

Each of the operators 221 uses data held in one or more of the data RAM 42, the vector register file 112, and the vector accumulator register 114 to execute an operation, such as a product-sum operation. The operator 221 executes the operation using a bit width sufficient to represent operation results. The operation to be executed by the operator 221 in the preceding operation is the same as or similar to an operation to be executed by the operator 221 in the main operation. The operator 221 outputs the operation results to the data RAM 42, the corresponding statistical information acquirer 222, and the corresponding data converter 223.

The statistical information acquirer 222 receives input of data of the operation results from the operator 221. In this case, the statistical information acquirer 222 acquires the data of the operation results represented using a bit width sufficient to maintain the accuracy.

The statistical information acquirer 222 acquires statistical information from the data of the operation results. For example, to acquire an unsigned most significant bit position, the statistical information acquirer 222 uses an unsigned most significant bit detector to generate output data having a value of 1 at the unsigned most significant bit position and values of Os at other bit positions. The statistical information acquirer 222 outputs the acquired statistical information to the statistical information aggregator 13. However, in the main operation, the statistical information acquirer 222 may not acquire the statistical information and may not output the acquired statistical information.

The data converter 223 acquires the operation results obtained by the operator 221. Next, in the main operation, the data converter 223 receives, from the controller 10, input of the decimal point position determined based on the statistical information acquired in the preceding operation. The data converter 223 shifts the fixed-point number data by a shift amount specified by the received decimal point position. The data converter 223 executes a saturation process on an upper bit and a rounding process on a lower bit, together with the shifting. By executing this, the data converter 223 updates the decimal point position of the fixed-point number data. In the preceding operation, the data converter 223 may not update the decimal point position. The data converter 223 causes the operation result indicating the updated decimal point position to be stored in the vector register file 112 and the data RAM 42.

The statistical information aggregator 13 receives, from the statistical information acquirer 212, input of the statistical information acquired from the data of the operation results obtained by the operator 211. The statistical information aggregator 13 receives, from the statistical information acquirers 222, input of the statistical information acquired from the data of the operation results obtained by the operators 221. The statistical information aggregator 13 aggregates the statistical information acquired from the statistical information acquirer 212 and the statistical information acquired from the statistical information acquirers 222 and outputs the aggregated statistical information to the statistical information storage section 115.

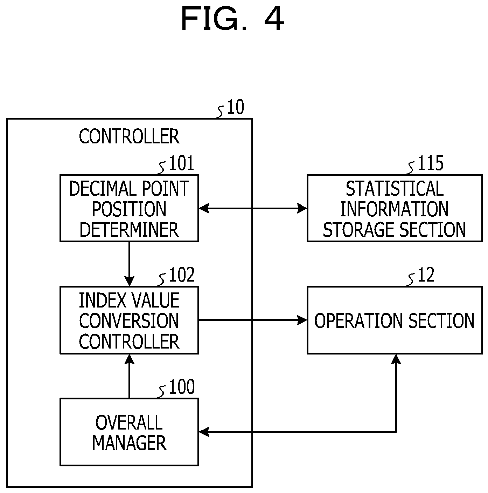

Next, the controller 10 is described. FIG. 4 is a block diagram illustrating details of the controller. As illustrated in FIG. 4, the controller 10 includes an overall manager 100, a decimal point position determiner 101, and an index value conversion controller 102.

The overall manager 100 manages the execution of the preceding operation by the operation section 12 and the execution of the main operation by the operation section 12. The overall manager 100 holds information of a layer in which the overall manager 100 causes the operation section 12 to execute an operation in the deep learning. When the layer in which the overall manager 100 causes the operation section 12 to execute the operation transitions to a next layer, the overall manager 100 determines the execution of the preceding operation. The overall manager 100 instructs the index value conversion controller 102 to output a decimal point position used in the previous layer and causes the operation section 12 to execute the preceding operation. In the present embodiment, the decimal point position used in the previous layer is used for the preceding operation, but another value may be used as long as the value is close to an appropriate decimal point position in the preceding operation to be executed. The decimal point position used in the previous layer is an example of a "first decimal point position".

When the execution of the preceding operation by the operation section 12 is completed, the overall manager 100 determines the execution of the main operation. The overall manager 100 instructs the index value conversion controller 102 to output a newly determined decimal point position and instructs the operation section 12 to execute the main operation. The overall manager 100 repeatedly executes, in each of the layers, control to cause the operation section 12 to execute the foregoing preceding operation and the foregoing main operation.

The overall manager 100 manages iterations to be executed in the deep learning. For example, when an instruction to execute a predetermined number of iterations is provided, the overall manager 100 counts the number of iterations executed. When the number of iterations executed reaches the predetermined number, the overall manager 100 determines the termination of the learning. The overall manager 100 notifies the termination of the learning to the CPU 2 and terminates the learning, for example. The overall manager 100 is an example of a "manager".

When the preceding operation executed by the operation section 12 is terminated in each of the layers, the decimal point position determiner 101 acquires the statistical information from the statistical information storage section 115. The decimal point position determiner 101 determines an optimal decimal point position using the acquired statistical information. The decimal point position determiner 101 outputs the determined decimal point position to the index value conversion controller 102. The decimal point position determiner 101 repeatedly executes, in each of the layers, a process of determining a decimal point position after the preceding operation. The decimal point position determined by the decimal point position determiner 101 is an example of a "second decimal point position".

The index value conversion controller 102 receives, from the overall manager 100, an instruction to output the decimal point position used in the previous layer. The index value conversion controller 102 outputs the decimal point position used in the previous layer to the operation section 12. However, when the layer is the initial layer in the deep learning, the index value conversion controller 102 treats, as a predetermined decimal point position, the initial decimal point position that is the first decimal point position.

After the preceding operation by the operation section 12 is completed, the index value conversion controller 102 receives, from the overall manager 100, input of an instruction to output the newly determined decimal point position. Next, the index value conversion controller 102 receives, from the decimal point position determiner 101, input of the decimal point position newly determined using an operation result of the preceding operation. The index value conversion controller 102 outputs information of the newly determined decimal point position to the operation section 12.

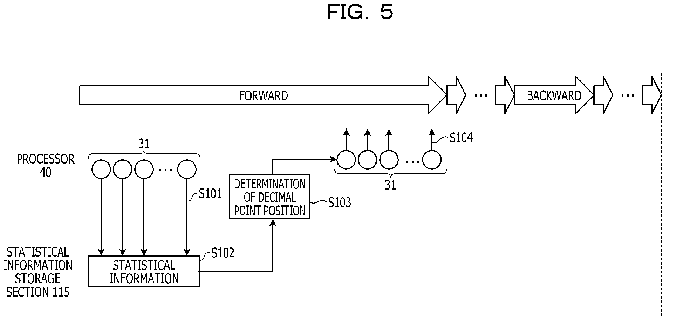

FIG. 5 is a diagram describing an entire process of updating a decimal point position according to Embodiment 1. The process of updating a fixed decimal point position in each of the layers by the operation circuit 4 according to the present embodiment is described with reference to FIG. 5. In FIG. 5, a region illustrated on the upper side of a broken line on a paper sheet of FIG. 5 indicates a process to be executed by the processor 40. In FIG. 5, a region illustrated on the lower side of the broken line on the paper sheet of FIG. 5 indicates information stored in the statistical information storage section 115.

The operators 211 and 221 of the processor 40 acquire input data 31. The input data 31 includes a plurality of operation data items. The operators 211 and 221 use the input data 31 to execute the preceding operation and obtain an operation result of the preceding operation. The statistical information acquirers 212 and 222 of the processor 40 calculate statistical information from the operation result calculated by the operators 211 and 221 (step S101). The statistical information aggregator 13 of the processor 40 acquires the statistical information from the statistical information acquirers 212 and 222 and causes the acquired statistical information to be stored in the statistical information storage section 115 (step S102).

The decimal point position determiner 101 included in the controller 10 of the processor 40 uses the statistical information stored in the statistical information storage section 115 to determine a decimal point position (step S103).

The operators 211 and 221 of the processor 40 use the input data 31 to execute the operation again. In this case, the operators 211 and 221 use the input data 31 to execute the same calculation twice. The data converters 213 and 223 of the processor 40 acquire information of the newly determined decimal point position from the decimal point position determiner 101. The data converters 213 and 223 use the newly determined decimal point position to shift a decimal point position of the operation result, executes the saturation process on an upper bit and the rounding process on a lower bit, and updates the decimal point position of the operation result that is fixed-point number data. The data converters 213 and 223 output the operation result indicating the updated decimal point position (step S104).

The processor 40 executes the deep learning by repeatedly executing the processes of steps S101 to S104 in each of the layers.

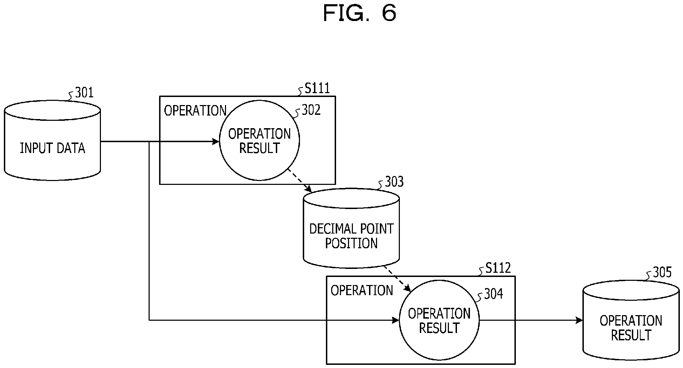

FIG. 6 is a diagram illustrating an overview of an operation process including an update to a decimal point position by the operation circuit according to Embodiment 1. The overview of the operation process including the update to the decimal point position by the operation circuit 4 according to the present embodiment is described with reference to FIG. 6.

The operation section 12 executes the preceding operation using the input data 301(step S111). The preceding operation is the first operation. By executing the preceding operation, an operation result 302 is obtained.

The decimal point position determiner 101 of the controller 10 uses statistical information of the operation result 302 of the preceding operation to determine a new decimal point position 303. The operation section 12 obtains an operation result 304 by executing the main operation using the input data 301 (step S112). The main operation is the second operation.

The operation section 12 uses the new decimal point position 303 to update a decimal point position of the operation result 304 of the second operation and calculates an operation result 305 that is a fixed-point number represented with a fixed decimal point at the new decimal point position.

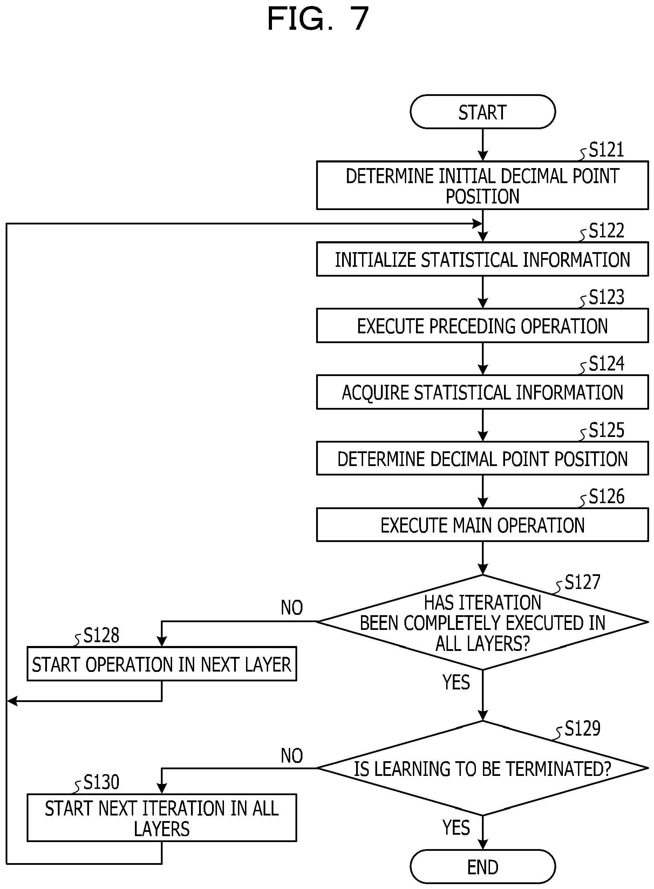

Next, the flow of a deep learning process by the operation circuit 4 according to the present embodiment is described with reference to FIG. 7. FIG. 7 is a flowchart of the deep learning process by the operation circuit according to Embodiment 1.

The index value conversion controller 102 of the controller 10 determines the predetermined decimal point position as the initial decimal point position (step S121).

The decimal point position determiner 101 initializes statistical information stored in the statistical information storage section 115 (step S122).

The operators 211 and 221 execute the preceding operation using input data (step S123).

The statistical information acquirers 212 and 222 calculate statistical information from an operation result of the preceding operation by the corresponding operators 211 and 221 (step S124). The statistical information aggregator 13 aggregates the statistical information from the statistical information acquirers 212 and 222 and stores the aggregated statistical information in the statistical information storage section 115.

The decimal point position determiner 101 of the controller 10 determines a new decimal point position using the statistical information of the operation result 302 of the preceding operation (step S125).

The index value conversion controller 102 of the controller 10 outputs the decimal point position notified by the decimal point position determiner 101 to the data converters 213 and 223 of the operation section 12. The operators 211 and 221 of the operation section 12 execute an operation using the input data. The data converters 213 and 223 use the decimal point position input from the index value conversion controller 102 to update a decimal point position of an operation result of the operation by the operators 211 and 221. In this manner, the operation section 12 executes the main operation (step S126).

The overall manager 100 of the controller 10 determines whether an iteration has been completely executed in all the layers (step S127). When a layer in which the iteration has not been completely executed remains (No in step S127), the overall manager 100 starts the operation in the next layer (step S128). The deep learning process returns to step S122.

On the other hand, when the iteration has been completely executed in all the layers (Yes in step S127), the overall manager 100 of the controller 10 determines whether the learning is to be terminated (step S129).

When the learning is not to be terminated (No in step S129), the overall manager 100 starts executing the next iteration in all the layers (step S130). The deep learning process returns to step S122.

On the other hand, when the learning is to be terminated (Yes in step S129), the overall manager 100 notifies the completion of the learning to the CPU 2 and terminates the learning.

As described above, the operation circuit according to the present embodiment executes the preceding operation using input data, uses statistical information obtained from a result of the preceding operation to determine an appropriate decimal point position for the operation executed using the input data. The operation circuit executes the main operation using the input data and obtains an operation result represented with a fixed decimal point at the determined decimal point position.

Therefore, when the deep learning is executed using Define-by-Run in which the computational graph that serves as the structure of the neural network is built while the deep learning process is executed, it is possible to determine an appropriate fixed decimal point position and improve the accuracy of the learning to be executed using a fixed decimal point.

### [Embodiment 2]

Next, Embodiment 2 is described. An operation circuit 4 according to the present embodiment executes an operation using some of a plurality of operation data items included in input data and determines a decimal point position based on statistical information of a result of the operation. This feature is different from Embodiment 1. The operation circuit 4 according to the present embodiment is also illustrated in the block diagrams of FIGs. 3 and 4. The same functions of the sections as those described in Embodiment 1 will not be described below.

The overall manager 100 selects an operation data item whose ratio to the operation data items included in the input data is equal to a predetermined ratio. Hereinafter, the predetermined ratio is N%, and the selected operation data item is referred to as N% operation data. The overall manager 100 instructs the operation section 12 to execute the preceding operation using the N% operation data.

After the completion of the preceding operation using the N% operation data, the overall manager 100 instructs the index value conversion controller 102 to output a new index value calculated from a result of the preceding operation and instructs the operation section 12 to execute the main operation using all the operation data items included in the input data.

The decimal point position determiner 101 acquires, from the statistical information storage section 115, statistical information calculated from the operation result of executing the operation using the N% operation data. The decimal point position determiner 101 uses the statistical information calculated from the operation result of executing the operation using the N% operation data to determine an appropriate decimal point position when the operation result of the input data is represented by a fixed-point number. The decimal point position determiner 101 outputs information of the determined decimal point position to the index value conversion controller 102.

The operation section 12 receives, from the overall manager 100, an instruction to execute the preceding operation using the N% operation data. The operation section 12 selects the operators 211 and 221 so that the number of selected operators 211 and 221 corresponds to the N% operation data.

The selected operators 211 and 221 execute the preceding operation using the N% operation data. The selected operators 211 and 221 output an operation result of the preceding operation to the statistical information acquirers 212 and 222.

When the operation section 12 receives an instruction to execute the main operation using all the operation data items included in the input data, the operators 211 and 221 execute the main operation using all the operation data items included in the input data. The operators 211 and 221 output, to the data converters 213 and 223, an operation result of executing the main operation using all the operation data items included in the input data.

The statistical information acquirers 212 and 222 corresponding to the operators 211 and 221 that have executed the preceding operation using the N% operation data acquire the operation result. The statistical information acquirers 212 and 222 acquire statistical information of the operation result and output the statistical information to the statistical information aggregator 13.

The statistical information aggregator 13 receives input of the statistical information from the statistical information acquirers 212 and 222 corresponding to the operators 211 and 221 that have executed the preceding operation using the N% operation data. The statistical information aggregator 13 aggregates the statistical information of the operation result of executing the preceding operation using the N% operation data and causes the aggregated statistical information to be stored in the statistical information storage section 115.

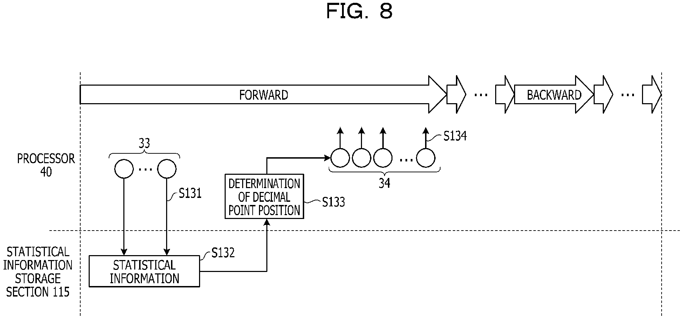

FIG. 8 is a diagram describing an entire process of updating a decimal point position according to Embodiment 2. The process of updating a fixed decimal point position in each of the layers by the operation circuit according to the present embodiment is described with reference to FIG. 8.

The operators 211 and 221 selected by the operation section 12 acquire the N% operation data 33 included in the input data. The selected operators 211 and 221 execute the preceding operation using the N% operation data 33 and obtain an operation result of executing the preceding operation. The statistical information acquirers 212 and 222 corresponding to the operators 211 and 221 that have executed the preceding operation using the N% operation data 33 calculate statistical information from the operation result of executing the preceding operation using the N% operation data 33 (step S131).

The statistical information aggregator 13 of the processor 40 acquires, from the statistical information acquirers 212 and 222, the statistical information of the operation result of executing the preceding operation using the N% operation data 33 and causes the acquired statistical information to be stored in the statistical information storage section 115 (step S132).

The decimal point position determiner 101 included in the controller 10 of the processor 40 determines a decimal point position using the statistical information that has been calculated from the operation result of executing the preceding operation using the N% operation data 33 and has been stored in the statistical information storage section 115 (step S133).

The operators 211 and 221 of the processor 40 execute the main operation using all the operation data items 34 included in the input data. The data converters 213 and 223 of the processor 40 acquire information of the newly determined decimal point position from the decimal point position determiner 101. The data converters 213 and 223 shift a result of the main operation based on the specified decimal point position, executes the saturation process on an upper bit and the rounding process on a lower bit, and updates a decimal point position of fixed-point number data. The operation section 12 outputs the fixed-point number data indicating the updated decimal point position (step S134).

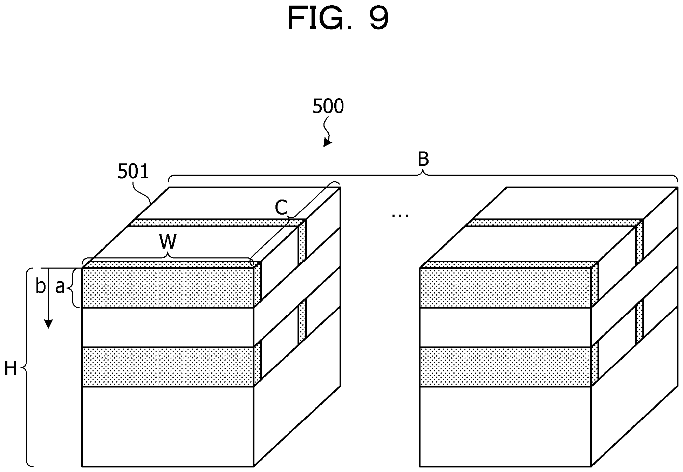

A method for selecting the N% operation data is described below. FIG. 9 is a diagram describing the selection of the N% operation data. Data 500 indicates one multi-dimensionally arrayed data item. B indicates a mini-batch. Input data 501 includes operation data arrayed in dimensional directions in which axes of three tensors extend. The tensors are a channel C, a width W, and a height H. In the selection of operation data from the input data 501, it is preferable to select the operation data without a bias.

For example, the bias may be reduced by selecting the operation data at equal intervals in the axes of the tensors. For example, operation data is selected at fixed intervals in the channel C direction, and operation data is selected at fixed intervals in the height H direction. For example, in FIG. 9, operation data having a distance a in the height H direction is selected at intervals of b in the height H direction.

As described above, the operation circuit according to the present embodiment executes the preceding operation using the N% operation data included in the input data and uses the statistical information obtained from the result of executing the preceding operation to determine the appropriate decimal point position for the operation executed using the input data. The operation circuit executes the main operation using all the operation data items included in the input data and obtains the operation result represented with the fixed decimal point at the determined decimal point position.

Therefore, when the deep learning is executed using Define-by-Run, it is possible to improve the accuracy of the learning using a fixed decimal point, reduce overhead for the operation by reducing the number of times that the first operation is executed, compared to Embodiment 1, and reduce a time period for executing the learning.

### (Modification)

When a large amount of operation data is used, it is possible to obtain statistical information based on an operation result and calculate an appropriate decimal point position. However, when the learning is repeated and a recognition rate increases, a difference between operation results decreases. It is, therefore, possible to calculate an appropriate decimal point position even when a small amount of operation data is used. Although the operation data item whose ratio is equal to the predetermined ratio is selected and the operations are executed in Embodiment 2, the ratio of an operation data item to be selected based on the recognition rate may be changed.

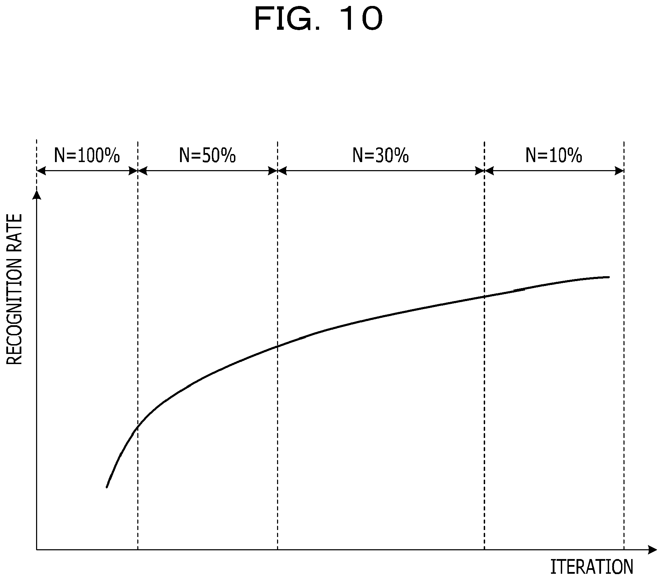

FIG. 10 is a diagram illustrating the ratio of an operation data item selected based on a selected recognition rate. In FIG. 10, the ordinate indicates the recognition rate and the abscissa indicates an iteration. As illustrated in FIG. 10, in the deep learning, the recognition rate is improved as the number of iterations executed increases and the learning is progressed. By changing the ratio of an operation data item to be selected based on the number of iterations executed, the ratio of an operation data item to be selected based on the recognition rate may be changed.

For example, as illustrated in FIG. 10, the overall manager 100 of the controller 10 divides the iterations to be executed in the deep learning into some groups and holds the numbers of times that iterations serving as boundaries of the groups have been executed. The overall manager 100 stores the number of iterations executed. The overall manager 100 treats N% indicated on the upper side of a paper sheet of FIG. 10 as the ratio of an operation data item to be selected. For example, the overall manager 100 sets the ratio of the operation data item to be selected to 100% at a start time of the learning. When the number of iterations executed reaches the number of times that the iterations serving as the boundaries of the groups have been executed, the overall manager 100 changes the ratio of the operation data item to be selected, notifies the changed ratio to the operation section 12, and sequentially changes the ratio of an operation data item from which statistical information is acquired.

As described above, an operation circuit according to this modification changes the ratio of an operation data item to be used for the operation to acquire statistical information to the ratio of an operation data item to be selected based on the recognition rate in the middle of the deep learning. It is, therefore, possible to reduce the number of times that the operations are executed using operation data items in the entire learning and reduce a processing load.

### [Embodiment 3]

Next, Embodiment 3 is described. An operation circuit 4 according to the present embodiment holds an operation result of the preceding operation, uses a decimal point position calculated from statistical information to update a decimal point position of the held operation result, and obtains a fixed-point number with a decimal point at an appropriate decimal point position. This feature is different from Embodiment 1. The operation circuit 4 according to the present embodiment is also illustrated in FIGs. 3 and 4. The same functions of the sections as those described in Embodiment 1 will not be described below.

Upon receiving an instruction from the overall manager 100, the operators 211 and 221 of the operation section 12 execute the preceding operation using input data. The operators 211 and 221 of the operation section 12 cause an operation result of the preceding operation to be stored in the data RAM 42. In this case, the operators 211 and 221 cause the operation result with full bits not reducing the accuracy of the operation result to be stored in the data RAM 42. The full bits not reducing the accuracy are a signed integer having a bit width wider than a bit width represented with a floating-decimal point or a fixed-decimal point, or the like. The statistical information acquirers 212 and 222 of the operation section 12 calculate statistical information from the operation result of the preceding operation and output the statistical information to the statistical information aggregator 13.

The data converters 213 and 223 of the operation section 12 receive input of a decimal point position from the index value conversion controller 102. The data converters 213 and 223 receive, from the overall manager 100, an instruction to update a decimal point position of the operation result of the preceding operation. The data converters 213 and 223 acquire the operation result of the preceding operation from the data RAM 42 and update the decimal point position of the operation result to the specified decimal point position. For example, the data converters 213 and 223 quantize the operation result of the preceding operation. The data converters 213 and 223 output the operation result indicating the updated decimal point position.

The overall manager 100 instructs the operation section 12 to execute the preceding operation. After the termination of the preceding operation, the overall manager 100 instructs the index value conversion controller 102 to update the decimal point position of the operation result of the preceding operation.

The index value conversion controller 102 outputs, to the data converters 213 and 223 of the operation section 12, information of the decimal point position acquired from the decimal point position determiner 101. The index value conversion controller 102 instructs the operation section 12 to update the decimal point position using the operation result of the preceding operation that has been acquired from the data RAM 42.

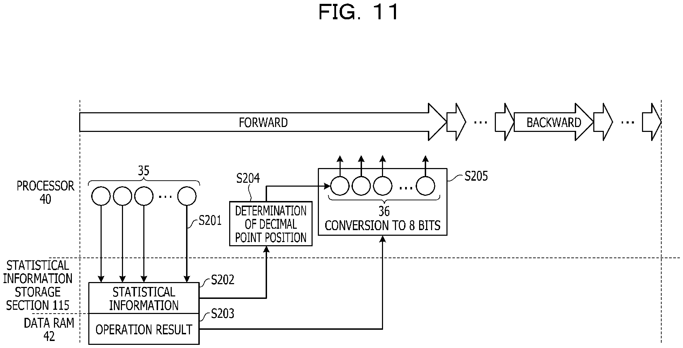

FIG. 11 is a diagram describing an entire process of updating a decimal point position according to Embodiment 3. The process of updating a fixed decimal point position in each of the layers by the operation circuit 4 according to the present embodiment is described with reference to FIG. 11. In FIG. 11, a region illustrated on the upper side of a broken line on a paper sheet of FIG. 11 indicates a process to be executed by the processor 40. In FIG. 11, a region illustrated on the lower side of the broken line on the paper sheet of FIG. 11 indicates information stored in the statistical information storage section 115 and the data RAM 42.

The operators 211 and 221 of the processor 40 acquire input data 35. The operators 211 and 221 execute the preceding operation using the input data 35 and obtain an operation result of the preceding operation. The statistical information acquirers 212 and 222 of the processor 40 calculate statistical information from the operation result calculated by the operators 211 and 221 (step S201).

The statistical information aggregator 13 of the processor 40 acquires the statistical information from the statistical information acquirers 212 and 222 and causes the acquired statistical information to be stored in the statistical information storage section 115 (step S202). The operators 211 and 221 cause the operation result with full bits not reducing the accuracy of the operation results to be stored in the data RAM 42 (step S203).

The decimal point position determiner 101 included in the controller 10 of the processor 40 determines a decimal point position using the statistical information stored in the statistical information storage section 115 (step S204).

The data converters 231 and 232 of the processor 40 acquire the operation result of the preceding operation that has been stored in the data RAM 42. The data converters 213 and 223 acquire information of the newly determined decimal point position from the decimal point position determiner 101. The data converter 213 and 223 shift the decimal point position of the acquired operation result using the newly determined decimal point position, execute the saturation process on an upper bit and the rounding process on a lower bit, and update the decimal point position of the operation result that is fixed-point number data. The data converters 213 and 223 output the operation result indicating the updated decimal point position (step S205).

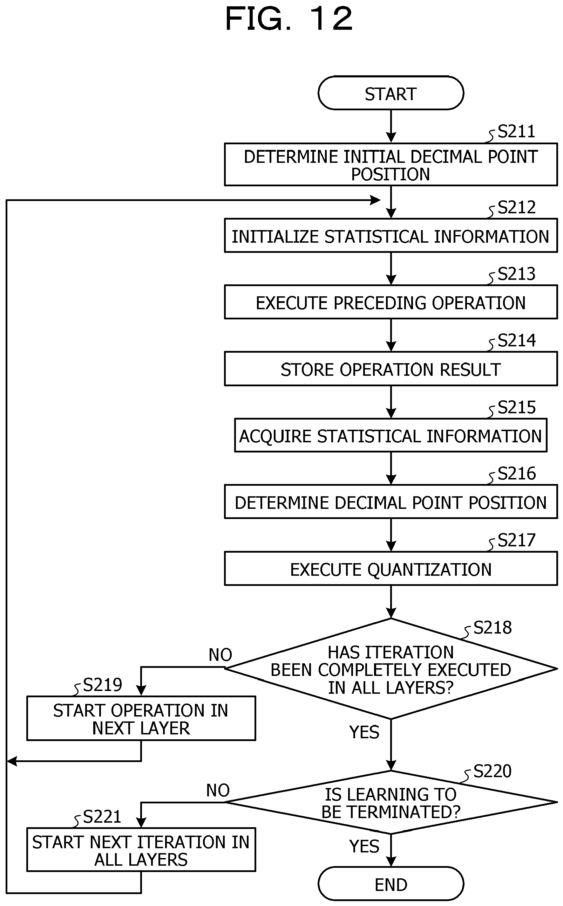

Next, the flow of a deep learning process by the operation circuit 4 according to the present embodiment is described with reference to FIG. 12. FIG. 12 is a flowchart of the deep learning process by the operation circuit according to Embodiment 3.

The index value conversion controller 102 of the controller 10 determines the predetermined decimal point position as the initial decimal point position (step S211).

The decimal point position determiner 101 initializes statistical information stored in the statistical information storage section 115 (step S212).

The operators 211 and 221 execute the preceding operation using input data (step S213).

The operators 211 and 221 obtain an operation result of the preceding operation and cause the obtained operation result with full bits not reducing the accuracy of the operation result to be stored in the data RAM 42 (step S214).

The statistical information acquirers 212 and 222 calculate statistical information from the operation result of the preceding operation by the corresponding operators 211 and 221 (step S215). The statistical information aggregator 13 aggregates the statistical information from the statistical information acquirers 212 and 222 and causes the aggregated statistical information to be stored in the statistical information storage section 115.

The decimal point position determiner 101 of the controller 10 determines a new decimal point position using the statistical information of the operation result 302 of the preceding operation (step S216).

The index value conversion controller 102 of the controller 10 outputs the decimal point position notified by the decimal point position determiner 101 to the data converters 213 and 223 of the operation section 12. The data converters 213 and 223 of the operation section 12 acquire the operation result of the preceding operation from the data RAM 42. The data converter 213 and 223 quantize the operation result of the preceding operation using the decimal point position input from the index value conversion controller 102 (step S217).

The overall manager 100 of the controller 10 determines whether an iteration has been completely executed in all the layers (step S218). When a layer in which the iteration has not been completely executed remains (No in step S218), the overall manager 100 starts the operation in the next layer (step S219). The deep learning process returns to step S212.

On the other hand, when the iteration has been completely executed in all the layers (Yes in step S218), the overall manager 100 of the controller 10 determines whether the learning is to be terminated (step S220).

When the learning is not to be terminated (No in step S220), the overall manager 100 starts executing the next iteration in all the layers (step S221). The deep learning process returns to step S212.

On the other hand, when the learning is to be terminated (Yes in step S220), the overall manager 100 notifies the completion of the learning to the CPU 2 and terminates the learning.

As described above, the operation circuit according to the present embodiment executes the preceding operation using the input data, stores the operation result, and uses the statistical information obtained from the result of the preceding operation to determine the appropriate decimal point position for the operation executed using the input data. The operation circuit uses the determined decimal point position to quantize the operation result of the preceding operation and obtains an operation result represented with a fixed decimal point at the specified decimal point position.

In this manner, the operation circuit according to the present embodiment executes the operation using the input data once in the quantization of the operation result. Therefore, when the deep learning is executed using Define-by-Run, it is possible to improve the accuracy of the learning using a fixed decimal point, reduce overhead for the operation, and reduce a time period for the learning.

### [Embodiment 4]

Next, Embodiment 4 is described. In Embodiment 3, the appropriate decimal point position is determined using the statistical information of the current operation result, and the current operation is executed again using the number of significant digits of a number with a decimal point at the determined decimal point position. In this case, the same calculation is executed twice and overhead for the operation may increase. When the deep learning is executed using DbR, it is preferable that the decimal point position be determined based on statistical information of the current operation result, but the overhead may increase as described above and a time period for executing the operation may increase.

To reduce the increase in the overhead for the operation, an operation circuit 4 according to the present embodiment executes the preceding operation using some of a plurality of operation data items included in input data and determines a decimal point position from statistical information of an operation result of the preceding operation. This feature is different from Embodiment 3. The operation circuit 4 according to the present embodiment is also illustrated in the block diagrams of FIGs. 3 and 4. The same functions of the sections as those described in Embodiment 3 will not described below.

The overall manager 100 selects an operation data item whose ratio to the operation data items included in the input data is equal to a predetermined ratio. Hereinafter, the predetermined ratio is N%, and the selected operation data item is referred to as N% operation data. The overall manager 100 instructs the operation section 12 to execute the preceding operation using the N% operation data.

The overall manager 100 instructs the index value conversion controller 102 to output a new index value and instructs the operation section 12 to execute the main operation using all the operation data items included in the input data.

The decimal point position determiner 101 acquires, from the statistical information storage section 115, statistical information calculated from an operation result of executing the operation using the N% operation data. The decimal point position determiner 101 uses the statistical information calculated from the operation result of executing the operation using the N% operation data to determine an appropriate decimal point position when the operation result of the input data is represented by a fixed-point number. The decimal point position determiner 101 outputs information of the determined decimal point position to the index value conversion controller 102.

The operation section 12 receives, from the overall manager 100, an instruction to execute the preceding operation using the N% operation data. The operation section 12 selects the operators 211 and 221 so that the number of selected operators 211 and 221 corresponds to the N% operation data.

The selected operators 211 and 221 execute the preceding operation using the N% operation data. The selected operators 211 and 221 output an operation result of the preceding operation to the statistical information acquirers 212 and 222. The selected operators 211 and 221 cause the preceding operation result with full bits not reducing the accuracy of the operation result to be stored in the data RAM 42.

When the operation section 12 receives an instruction to quantize all the operation data items included in the input data, the operators 211 and 221 execute the main operation using the remaining operation data items included in the input data and excluding the N% operation data. The operators 211 and 221 output, to the data converters 213 and 223, an operation result of executing the main operation using the remaining operation data items.

The data converters 213 and 223 receive input of the information of the new decimal point position from the index value conversion controller 102. The data converters 213 and 223 acquire, from the data RAM 42, the operation result of executing the preceding operation using the N% operation data. The data converters 213 and 223 receive input of the operation result of executing the operation using the remaining operation data items from the operators 211 and 221. The data converters 213 and 223 use the specified decimal point position to quantize all operation results including the operation result of executing the preceding operation using the N% operation data and the operation result of executing the operation using the remaining operation data items, and calculate an operation result represented as a fixed-point number with a decimal point at the specified decimal point position.

The statistical information acquirers 212 and 222 corresponding to the operators 211 and 221 that have executed the preceding operation using the N% operation data acquire the operation result. The statistical information acquirers 212 and 222 acquire statistical information of the operation result and output the statistical information to the statistical information aggregator 13.

The statistical information aggregator 13 receives input of the statistical information from the statistical information acquirers 212 and 222 corresponding to the operators 211 and 221 that have executed the preceding operation using the N% operation data. The statistical information aggregator 13 aggregates the statistical information of the operation result of executing the preceding operation using the N% operation data and causes the aggregated statistical information to be stored in the statistical information storage section 115.

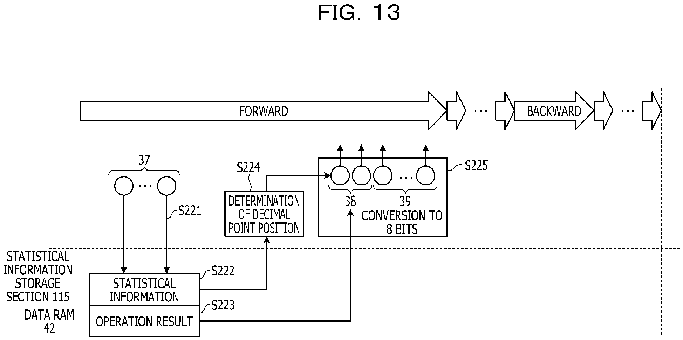

FIG. 13 is a diagram describing an entire process of updating a decimal point position according to Embodiment 4. The process of updating a fixed decimal point position in each of the layers by the operation circuit 4 according to the present embodiment is described with reference to FIG. 13.

The operators 211 and 221 selected by the operation section 12 acquire N% operation data 37 included in input data. The selected operators 211 and 221 execute the preceding operation using the N% operation data 37 and obtain an operation result of executing the preceding operation. The statistical information acquirers 212 and 222 corresponding to the operators 211 and 221 that have executed the preceding operation using the N% operation data 37 calculate statistical information from the operation result of executing the preceding operation using the N% operation data 37 (step S221).

The statistical information aggregator 13 of the processor 40 acquires, from the statistical information acquirers 212 and 222, the statistical information of the operation result of executing the preceding operation using the N% operation data 37 and causes the acquired statistical information to be stored in the statistical information storage section 115 (step S222).

The operators 211 and 221 cause the operation result of executing the preceding operation using the N% operation data 37 to be stored in the data RAM 42 (step S223).

The decimal point position determiner 101 included in the controller 10 of the processor 40 determines a decimal point position using the statistical information that has been calculated from the operation result of executing the preceding operation using the N% operation data 37 and has been stored in the statistical information storage section 115 (step S224).

The operators 211 and 221 of the processor 40 execute the operation using remaining operation data items 38 and 39 included in the input data and excluding the N% operation data. The data converters 213 and 223 acquire an operation result of executing the operation using the remaining operation data items 38 and 39 from the operators 211 and 221. The data converters 213 and 223 acquire, from the data RAM 42, the operation result of executing the preceding operation using the N% operation data. The data converters 213 and 223 acquire information of the newly determined decimal point position from the decimal point position determiner 101. The data converters 213 and 223 shift, based on the specified decimal point position, a data result obtained by combining the operation results of executing the operations using the operation data items 38 and 39, executes the saturation process on an upper bit and the rounding process on a lower bit, and updates a decimal point position of fixed-point number data. The operation section 12 outputs the fixed-point number data indicating the decimal point position (step S225) .

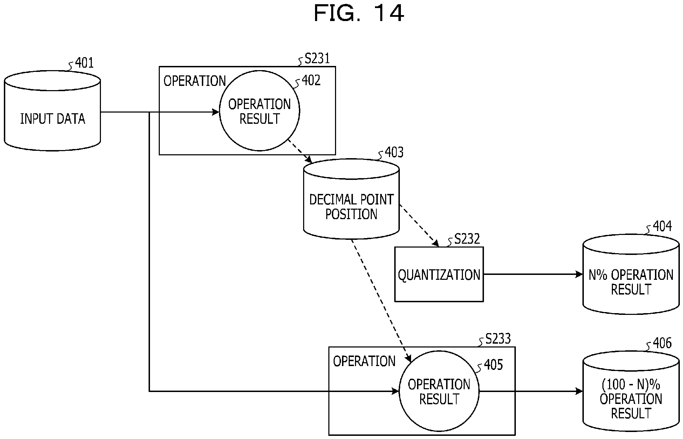

FIG. 14 is a diagram illustrating an overview of an operation process including an update to a decimal point position by the operation circuit according to Embodiment 4. The overview of the operation process including the update to the decimal point position by the operation circuit 4 according to the present embodiment is described with reference to FIG. 14.

The operation section 12 executes the preceding operation using input data 401 (step S231). The preceding operation is the first operation. The operation section 12 obtains an operation result 402 by executing the preceding operation.

The decimal point position determiner 101 of the controller 10 determines a new decimal point position 403 using statistical information of the operation result 402 of the preceding operation. The operation section 12 quantizes the operation result of executing the preceding operation using N% operation data (step S232) and obtains an N% operation result 404.

The operation section 12 executes the second operation using remaining (100 - N)% operation data items included in the input data 401 to and acquires an operation result 405 (step S233).

The operation section 12 uses the new decimal point position 403 to quantize the operation result 405 and calculates an operation result 406 that is a fixed-point number with a fixed decimal point at the new decimal point position.

As described above, the operation circuit according to the present embodiment executes the preceding operation using the N% operation data included in the input data and uses the statistical information obtained from the result of executing the preceding operation to determine the appropriate decimal point position for the operation executed using the input data. The operation circuit executes the operation using the remaining operation data items included in the input data and excluding the N% operation data and combines the remaining operation data items and the operation result of executing the preceding operation using the N% operation data to obtain the operation result represented with the fixed decimal point at the determined decimal point position.

Therefore, when the deep learning is executed using Define-by-Run, it is possible to improve the accuracy of the learning using a fixed decimal point, reduce overhead for the operation by reducing the number of times that the first operation is executed, compared to Embodiment 3, and reduce a time period for the learning.

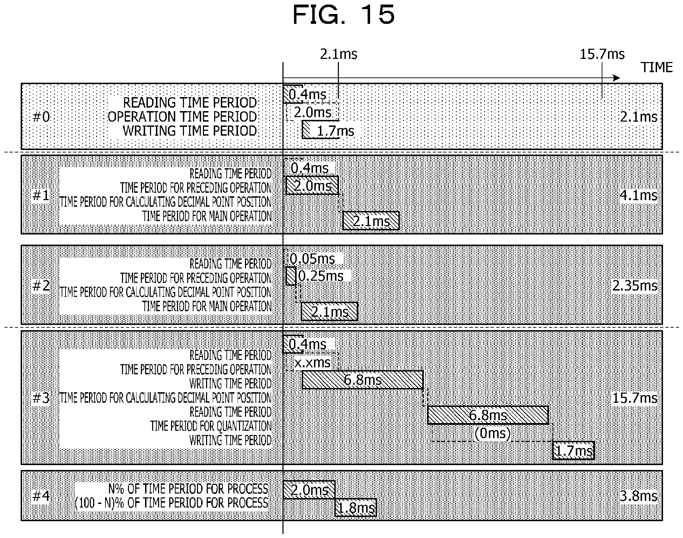

FIG. 15 is a diagram illustrating time periods for executing the operation processes according to Embodiments 1 to 4. The time periods for executing the operation processes according to the embodiments are described with reference to FIG. 15. A process #0 illustrated in FIG. 15 indicates an operation process of updating a decimal point position using statistical information of a previous iteration. A process #1 indicates the operation process of updating a decimal point position by the method described in Embodiment 1. A process #2 indicates the operation process of updating a decimal point position by the method described in Embodiment 2. A process #3 indicates the operation process of updating a decimal point position by the method described in Embodiment 3. A process #4 indicates the operation process of updating a decimal point position by the method described in Embodiment 4. The case where a time period for the process #0 is controlled to a longer one of an operation time period and a data transfer time period obtained by summing a reading time period and a writing time period is described as a prerequisite.

The time period for the process #0 is equal to a longer one of the operation time period and the time period obtained by summing the reading time period and the writing time period. In this case, the time period obtained by summing the reading time period and the writing time period is longer and the time period for the process #0 is 2.1 ms.

A time period for the process #1 is the total of a time period for the preceding operation, a time period for calculating the decimal point position, and a time period for the main operation. In this case, the time period for calculating the decimal point position is a longer one of a reading time period and an operation time period. The time period for calculating the decimal point position, however, may be relatively ignored. The time period for the main operation is equal to or nearly equal to the time period for the process #0. In this case, the time period for the process #1 is 4.1 ms.

It is assumed that N% that is the ratio of an operation data item to be selected is 12.5% in the process #2. A time period for the process #2 is the total of a time period for the preceding operation, a time period for calculating the decimal point position, and a time period for the main operation. The time period for the preceding operation in the process #2 is 12.5% of the time period for the preceding operation in the process #1. The time period for calculating the decimal point position may be relatively ignored. The time period for the main operation is equal to or nearly equal to the time period for the process #0. In this case, the time period for the process #2 is 2.35 ms.

The case where the number of bits to be quantized is 1/4 of the number of bits not to be quantized in the process #3 is described below. For example, a quantized representation is an 8-bit integer and a non-quantized representation is a 32-bit floating-point number. In this case, time periods for reading and writing bits not to be quantized are 4 times as long as time periods for reading and writing bits to be quantized. A time period for the process #3 is the total of a longer one of an operation time period and the total of the time period for reading bits to be quantized and a time period that is 4 times as long as the time period for writing bits to be quantized, a time period that is 4 times as long as the time period for reading bits to be quantized, and the time period for writing bits to be quantized. In this case, the time period for the process #3 is 15.7 ms.

It is assumed that N% that is the ratio of an operation data item to be selected is 12.5% in the process #4. A time period for the process #4 is the total of N% of the time period for the process #3 and (100 - N)% of the time period for the process #0. In this case, the time period for the process #4 is 3.8 ms. The case where the data transfer time period is longer than the operation time period is described above as an example. In the opposite case, the time periods for the processes #3 and #4 may be shorter than the time periods for the #1 and #2.

### [Embodiment 5]

Next, Embodiment 5 is described. An operation circuit 4 according to the present embodiment selects, for each of the layers in the deep learning, either the method for updating a decimal point position according to Embodiment 2 and the method for updating a decimal point position according to Embodiment 4, and executes the selected method. The method for updating a decimal point position according to Embodiment 2 is an example of a "first process". The method for updating a decimal point position according to Embodiment 4 is an example of a "second process". The operation circuit 4 according to the present embodiment is also illustrated in FIGs. 3 and 4. The same functions of the sections as those described in Embodiment 1 or 2 will not be described below. In the following description, the method for updating a decimal point position according to Embodiment 2 is referred to as an "update to a decimal point position by the two operations", and the method for updating a decimal point position according to Embodiment 4 is referred to as an "update to a decimal point position by operation result holding". The following description assumes that the ratio of an operation data item to be selected in an update to each decimal point position is 20%.

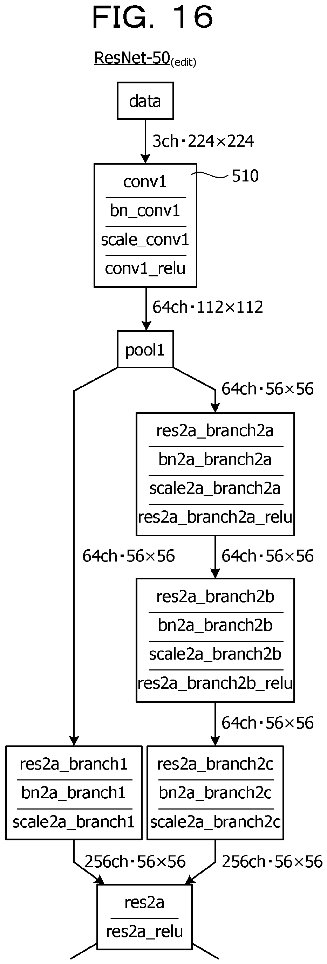

FIG. 16 is a diagram illustrating an example of the layers in the deep learning. The case where the deep learning has layers 510 illustrated in FIG. 15 is described below. Each of rectangular frames illustrated in FIG. 16 indicates a respective one of the layers 510. In the present embodiment, since the deep learning is executed using Define-by-Run, a route is branched in the middle of the deep learning.

The overall manager 100 of the controller 10 executes, in each of the layers, both the process of updating a decimal point position by the two operations and the process of updating the decimal point position by the operation result holding until the number of iterations executed reaches a predetermined number. The overall manager 100 holds a time period for which the process of updating the decimal point position by the two operations in each of the layers has been executed and a time period for which the process of updating the decimal point position by the operation result holding in each of the layers has been executed.

When the number of iterations executed reaches the predetermined number, the overall manager 100 calculates, for each of the layers, an average value of time periods for which the process of updating the decimal point position by the two operations has been executed and an average value of time periods for which the process of updating the decimal point position by the operation result holding has been executed. The overall manager 100 treats the calculated average values as time periods for the processes. The overall manager 100 selects, as a method for updating a decimal point position in each of the layers, a process to be executed for a shorter time period from the process of updating the decimal point position by the two operations and the process of updating the decimal point position by the operation result holding. The overall manager 100 controls the operation section 12 so that the decimal point position is updated by a method, selected for each of the layers, for updating the decimal point position.

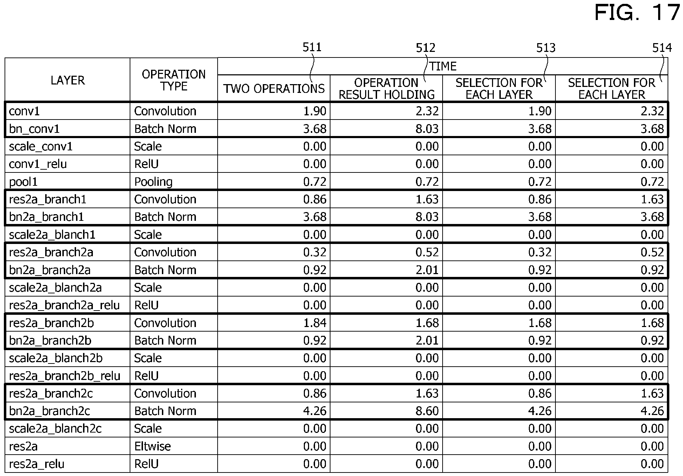

FIG. 17 is a diagram illustrating results of selecting a method for updating a decimal point position. Each of rows illustrated in FIG. 17 corresponds to a respective one of the layers 510 illustrated in FIG. 16. Rows surrounded by solid frames indicate layers in which the processes of updating a decimal point position are executed. A column 511 indicates time periods for the process of updating a decimal point position by the two operations. A column 512 indicates time periods for the process of updating a decimal point position by the operation result holding. A column 513 indicates results of selecting a process of updating a decimal point position in each of the layers. Each of the selection results indicates a method for updating a decimal point position so that patterns match.

In the deep learning according to the present embodiment, in each of the layers illustrated in FIG. 16, a time period for updating a decimal point position by the two operations is shorter than a time period for updating the decimal point position by the operation result holding. As indicated by the column 513, the overall manager 100 selects the process of updating a decimal point position by the two operations in each of the layers.

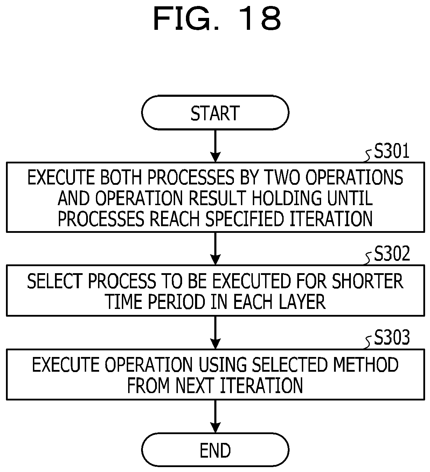

The flow of the selection of a method for updating a decimal point position according to Embodiment 5 is described with reference to FIG. 18. FIG. 18 is a flowchart of the selection of a process of updating a decimal point position according to Embodiment 5.

The overall manager 100 executes, in each of the layers, both the process of updating a decimal point position by the two operations and the process of updating the decimal point position by the operation result holding until the processes reach a specified iteration (step S301). The overall manager 100 holds elapsed time periods for the processes.

When the processes reach the specified iteration, the overall manager 100 calculates an average value of the held elapsed time periods for each of the layers and calculates a time period for the process of updating a decimal point position by the two operations in each of the layers and a time period for the process of updating a decimal point position by the operation result holding in each of the layers. The overall manager 100 selects a process to be executed for a shorter time period from the foregoing two processes as a method for updating a decimal point position in each of the layers (step S302).

The overall manager 100 executes an operation using the selected method for updating a decimal point position from the next iteration of the specified iteration (step S303).

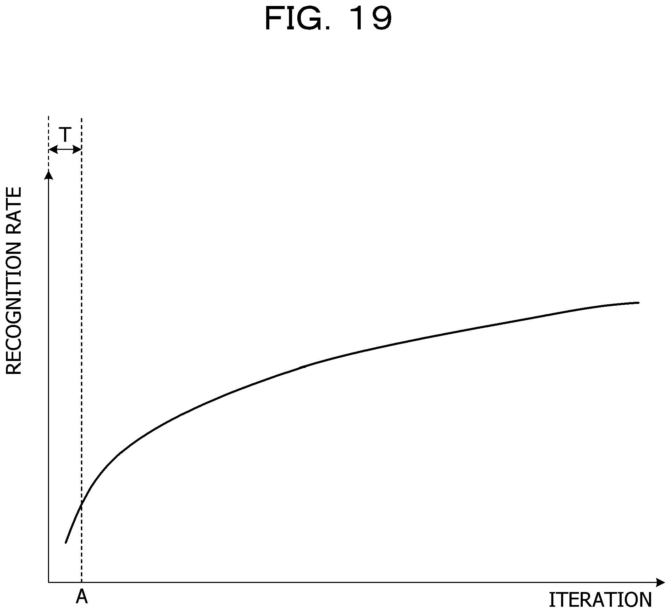

FIG. 19 is a diagram illustrating the timing of selecting a method for updating a decimal point position. For example, the predetermined number-th iteration is referred to as an A-th iteration. In this case, the overall manager 100 executes the two methods for updating a decimal point position until the processes reach the A-th iteration. For example, during a time period T, the operations are executed using the two methods for updating a decimal point position in each of the layers. The overall manager 100 selects a method for updating a decimal point position for each of the layers and the operations are executed using the selected method for updating a decimal point position in A+1-th and later iterations.

### (Modification)

In Embodiment 5, a method for updating a decimal point position is selected for each of the layers. The selection method, however, is not limited to this. For example, a method for updating a decimal point position may be selected based on the type of an operation to be executed in each of the layers.

In this case, the overall manager 100 calculates a time period for a process of updating a decimal point position in each of the layers. After the calculation, the overall manager 100 divides the layers into groups for operation types, calculates the average of time periods for the processes for each of the operation types, and treats the average as a process time period for each of the operation types. For example, when the layers are the layers illustrated in FIG. 16, the operation types are two types, convolution and batch norm. The overall manager 100 calculates a process time period of a layer for executing convolution and a process time period of a layer for executing batch norm. The overall manager 100 selects, as a method for updating a decimal point position in each of the layers, a process to be executed for a shorter time period from the foregoing two processes for each of the types of the operations to be executed.

A column 514 illustrated in FIG. 17 indicates results of selecting a method for updating a decimal point position based on the type of an operation. In this case, in each of layers for executing convolution, a time period for the process of updating a decimal point position by the operation result holding is shorter than a time period for the process of updating a decimal point position by the two operations. In each of layers for executing batch norm, a time period for the process of updating a decimal point position by the two operations is shorter than a time period for the process of updating a decimal point position by the operation result holding. The overall manager 100 selects the process of updating a decimal point position by the operation result holding for each of the layers for executing convolution and selects the process of updating a decimal point position by the two operations for each of the layers for executing batch norm.

In this case, in step S302 illustrated in FIG. 18 in the flow of the selection of a process of updating a decimal point position, the overall manager 100 calculates a process time period for each of the operation types and selects, as a method for updating a decimal point position in each of the layers, a process to be executed for a shorter time period from the foregoing two processes for each of the operation types.

As described above, each of the operation circuit according to the present embodiment and an operation circuit according to the modification selects, in a specific layer, a process to be executed for a shorter time period from the process of updating a decimal point position by the two operations and the process of updating a decimal point position by the operation result holding and executes the learning process. This may reduce a time period for the learning process.

Although each of the foregoing embodiments does not describe a resource to be used to calculate a decimal point position and execute the operations, it is important to determine resources to be allocated to the processes. The following embodiment describes an example of the allocation of resources.

### [Embodiment 6]

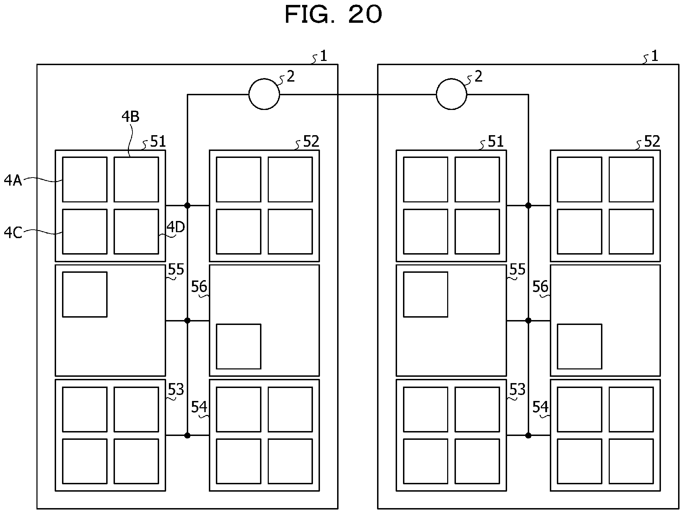

Embodiment 6 is described below. FIG. 20 is a diagram illustrating an example of configurations of servers including calculation circuits. In the present embodiment, each of servers 1 includes accelerators 51 to 56. CPUs 2 included in the servers 1 are coupled to each other via a wired local area network (LAN). In each of the servers 1, the CPU 2 is coupled to the accelerators 51 to 56 via a PCIe bus.

The accelerator 51 is an LSI including 4 operation circuits 4 that are operation circuits 4A to 4D. Each of the accelerators 52 to 54 also includes 4 operation circuits 4. Each of accelerators 55 and 56 is a reduced-version LSI that includes a single operation circuit 4.

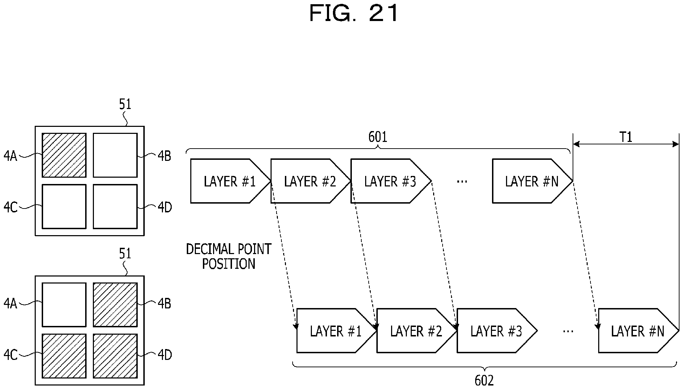

FIG. 21 is a diagram describing an operation procedure according to Embodiment 6. In the present embodiment, since each of the accelerators 51 to 54 operates in the same manner as the other accelerators, the accelerator 51 is described below as an example.

The upper side of FIG. 21 indicates the preceding operation process described in Embodiment 2 and to be executed in each of layers #1 to #N, while the lower side of FIG. 21 indicates the main operation process described in Embodiment 2 and to be executed in each of the layers #1 to #N. Operation circuits that are among the operation circuits 4A to 4D included in the accelerators 51 corresponding to the upper and lower sides of FIG. 21 and are indicated by diagonal lines execute the operations.

The overall manager 100 of the controller 10 included in the operation circuit 4A instructs the operation section 12 of the operation circuit 4A to execute the preceding operation using the N% operation data in each of the layers #1 to #N.

The decimal point position determiner 101 of the controller 10 included in the operation circuit 4A acquires, from the statistical information storage section 115 of the operation circuit 4A, statistical information of an operation result, calculated by the operation section 12 of the operation circuit 4A, of executing the preceding operation using the N% operation data. The decimal point position determiner 101 determines an optimal decimal point position using the acquired statistical information. The decimal point position determiner 101 outputs the determined decimal point position to the index value conversion controller 102 of the controller 10 included in the operation circuit 4A. The decimal point position determiner 101 of the controller 10 included in the operation circuit 4A determines decimal point positions in the layers #1 to #N and outputs the determined decimal point positions.

The index value conversion controller 102 of the controller 10 included in the operation circuit 4A notifies the decimal point positions determined by the decimal point position determiner 101 of the controller 10 included in the operation circuit 4A to the controllers 10 of the operation circuits 4B to 4D.

The operation section 12 of the operation circuit 4A executes the preceding operation using the N% operation data. The operation section 12 of the operation circuit 4A executes the preceding operation in each of the layers #1 to #N. Therefore, the operation section 12 of the operation circuit 4A may pipeline the preceding operation for each of the layers #1 to #N. The operation section 12 of the operation circuit 4A is an example of a "first operation section".

The controllers 10 of the operation circuits 4B to 4D receive the notifications of the decimal point positions from the index value conversion controller 102 of the controller 10 included in the operation circuit 4A in the layers #1 to #N. The overall managers 100 of the controllers 10 of the operation circuits 4B to 4D instruct the index value conversion controllers 102 of the controllers 10 of the operation circuits 4B to 4D to output the acquired decimal point positions. The overall managers 100 of the operation circuits 4B to 4D instruct the operation sections 12 of the operation circuits 4B to 4D to execute the main operation using the decimal point positions output from the index value conversion controllers 102 of the operation circuits 4B to 4D.

The index value conversion controllers 102 of the controllers 10 of the operation circuits 4B to 4D output the acquired decimal point positions to the operation sections 12 of the operation circuits 4B to 4D.

The operation sections 12 of the operation circuits 4B to 4D use the decimal point positions input from the index value conversion controllers 102 of the operation circuits 4B to 4D to execute the main operation in each of the layers #1 to #N. Therefore, each of the operation sections 12 of the operation circuits 4B to 4D may pipeline the main operation for each of the layers #1 to #N. Each of the operation sections 12 of the operation circuits 4B to 4D is an example of a "second operation section".

In this case, as illustrated in FIG. 21, the operation sections 12 of the operation circuits 4B to 4D may execute a process 602 of pipelining the main operation in parallel with a process 601 of pipelining the preceding operation by the operation section 12 of the operation circuit 4A. Therefore, a time period T1 that causes overhead for the operation process in the deep learning corresponds to a single layer in which a process is executed for the longest time period among time periods for processes in the layers.

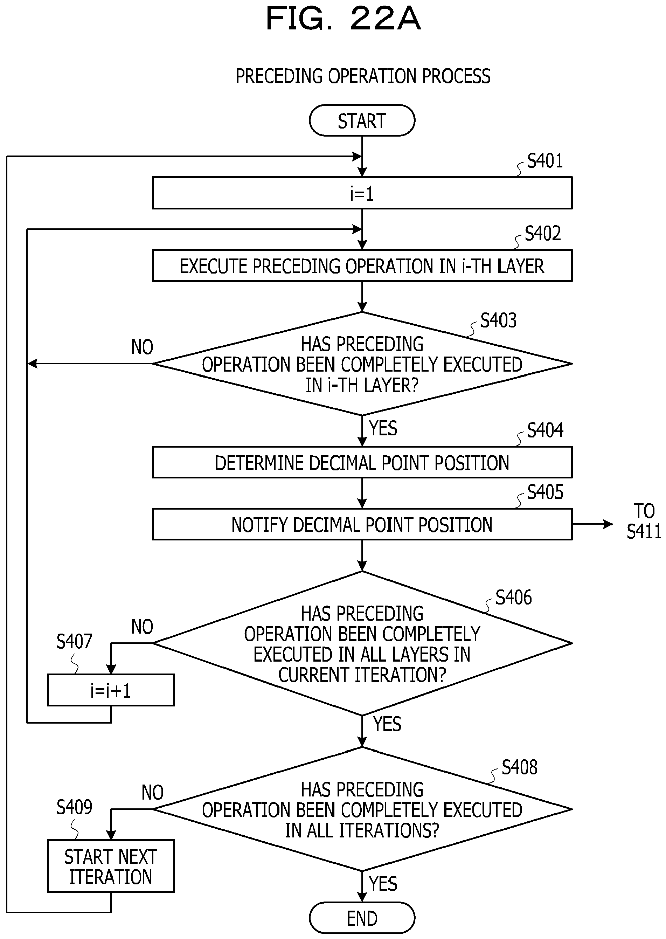

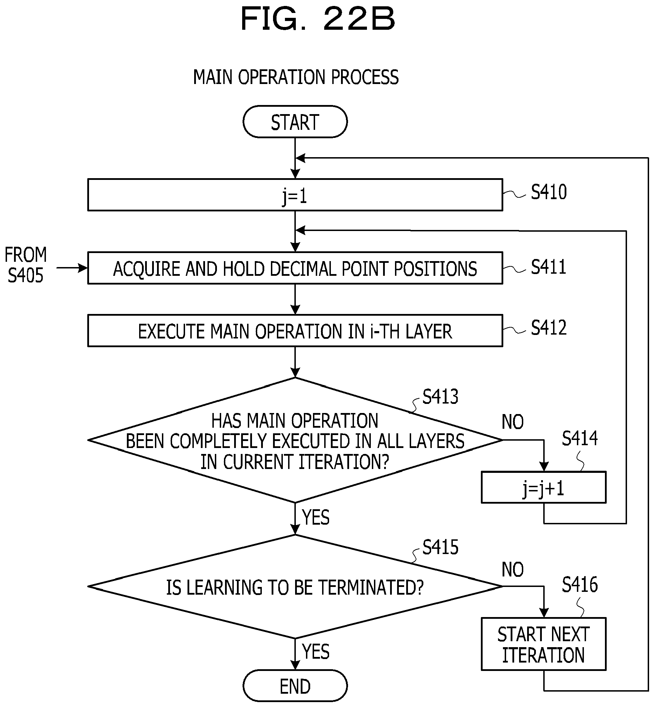

FIGs. 22A to 22B describes the flow of an operation process in the deep learning by the server 1 according to the present embodiment. FIGs. 22A to 22B are a flowchart of the operation process in the deep learning by the server according to Embodiment 6.

The overall manager 100 of the operation circuit 4A sets, to 1, i indicating a number of a layer in which the preceding operation is being executed (step S401).

The overall manager 100 of the operation circuit 4A instructs the operation section 12 of the operation circuit 4A to execute the preceding operation using the N% operation data in the i-th layer. The operation section 12 of the operation circuit 4A executes the preceding operation using the N% operation data in the i-th layer (step S402).

The overall manager 100 of the operation circuit 4A determines whether the preceding operation has been completely executed in the i-th layer (step S403). When the preceding operation has not been completely executed (No in step S403), the preceding operation process returns to step S402.

On the other hand, when the preceding operation has been completely executed (Yes in step S403), the decimal point position determiner 101 of the operation circuit 4A determines an appropriate decimal point position using statistical information acquired from an operation result of the preceding operation (step S404).

The index value conversion controller 102 of the operation circuit 4A notifies the decimal point position determined by the decimal point position determiner 101 to the controllers 10 of the operation circuits 4B to 4D (step S405).

The overall manager 100 of the operation circuit 4A determines whether the preceding operation has been completely executed in all the layers in a current iteration that is being executed (step S406). When a layer in which the preceding operation has not been completely executed remains in the current iteration (No in step S406), the overall manager 100 of the operation circuit 4A increments i by 1 (step S407). The preceding operation process returns to step S402.

On the other hand, when the preceding operation has been completely executed in all the layers in the current iteration (Yes in step S406), the overall manager 100 of the operation circuit 4A determines whether the preceding operation has been completed in all iterations (step S408). When the preceding operation has not been completely executed in one or more of all the iterations (No in step S408), the overall manager 100 of the operation circuit 4A starts the next iteration (step S409) and the preceding operation process returns to step S402.

On the other hand, when the preceding operation has been completely executed in all the iterations (Yes in step S408), the overall manager 100 of the operation circuit 4A terminates the preceding operation process in the deep learning.

The overall managers 100 of the operation circuits 4B to 4D set, to 1, j indicating a number of a layer in which the main operation is being executed (step S410).

The index value conversion controllers 102 of the operation circuits 4B to 4D acquire and hold decimal point positions transmitted by the index value conversion controller 102 of the operation circuit 4A for each of the layers (step S411). The index value conversion controllers 102 of the operation circuits 4B to 4D receive, from the overall managers 100 of the operation circuits 4B to 4D, an instruction to output the decimal point positions for each of the layers, and output the decimal point positions to be used for the layers to the operation sections 12 of the operation circuits 4B to 4D.

The operation sections 12 of the operation circuits 4B to 4D execute the main operation using the decimal point positions input from the index value conversion controllers 102 for each of the layers (step S412).

The overall managers 100 of the operation circuits 4B to 4D determine whether the main operation has been completely executed in all the layers in the current iteration (step S413). When a layer in which the main operation has not been completely executed remains in the current iteration remains (No in step S413), the overall managers 100 of the operation circuits 4B to 4D increment j by 1 (step S414). The main operation process returns to step S411.

On the other hand, when the main operation has been completely executed in all the layers in the current iteration (Yes in step S413), the overall managers 100 of the operation circuits 4B to 4D determine whether the learning is to be terminated (step S415). When the learning is not to be terminated (No in step S415), the overall managers 100 of the operation circuits 4B to 4D start the next iteration (step S416) and the main operation process returns to step S410.

On the other hand, when the learning is to be terminated (Yes in step S415), the overall managers 100 of the operation circuits 4B to 4D terminate the main operation process in the deep learning.

As described above, the server according to the present embodiment includes the accelerators, each of which includes the plurality of operation circuits. Each of the accelerators causes a single operation circuit to execute the preceding operation and causes the other operation circuits included in the accelerator to execute the main operation using a decimal point position determined based on an operation result of the preceding operation. This may pipeline the preceding operation and the main operation. Since the processes may be executed in parallel, it is possible to reduce overhead and reduce a time period for the processes.

### [Embodiment 7]

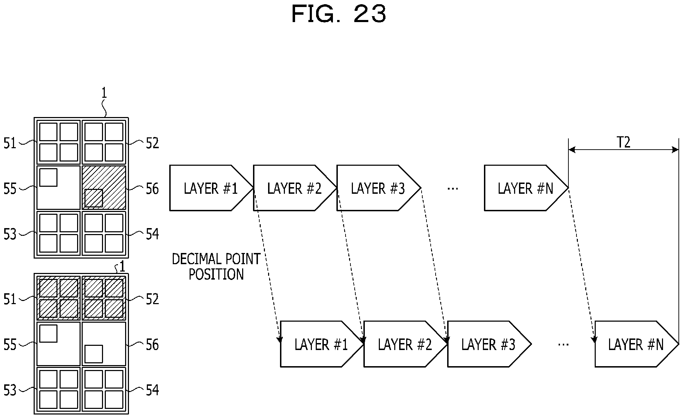

Embodiment 7 is described below. A server 1 according to the present embodiment has the configuration illustrated in FIG. 20. The server 1 according to the present embodiment executes the preceding operation using the accelerator 56 and executes the main operation using the accelerators 51 and 52. This feature is different from Embodiment 6. The accelerator 56 is the reduced-version LSI. FIG. 23 is a diagram describing an operation procedure according to Embodiment 7.

The number of operation circuits 4 included in each of the accelerators 55 and 56 is smaller than the number of operation circuits 4 included in each of the accelerators 51 to 54. Each of the accelerators 51 to 54 has performance sufficient to execute the learning. Each of the accelerators 55 and 56 has the same functions as those of the accelerators 51 to 54. Each of the accelerators 55 and 56 mainly execute control and has low computational power. For example, the computational power of each of the accelerators 55 and 56 is approximately 1/4 of the computational power of each of the accelerators 51 to 54. The preceding operation is an operation to be executed on some of operation data items included in input data, and a processing load of the preceding operation is lower than that of the main operation. Therefore, a process time period for the preceding operation by each of the accelerators 55 and 56 is not long.

The accelerator 56 plays the same role as that of the operation circuit 4A described in Embodiment 6. For example, the accelerator 56 executes the preceding operation in each of the layers #1 to #N and determines an appropriate decimal point position using statistical information obtained from an operation result of the preceding operation. The accelerator 56 outputs the determined decimal point position to the accelerators 51 and 52. This may pipeline the preceding operation to be executed by the accelerator 56.

The accelerators 51 and 52 play the same roles as those of the operation circuits 4B to 4D described in Embodiment 6. For example, the accelerators 51 and 52 acquire the decimal point position determined by the accelerator 56 and uses the decimal point position to execute the main operation in each of the layers #1 to #N. This may pipeline the preceding operation to be executed by the accelerators 51 and 52.

In this case, the accelerators 51 and 52 may execute the pipelined main operation in parallel with the pipelined preceding operation executed by the accelerator 56. Therefore, a time period T2 that causes overhead for the operation process in the deep learning corresponds to a single layer in which a process is executed for the longest time period among time periods for processes in the layers.

As described above, the server according to the present embodiment uses the accelerators with low processing performance to execute the preceding operation and uses the accelerators with sufficient processing performance to execute the main operation using a decimal point position determined based on an operation result of the preceding operation. This may pipeline the preceding operation and the main operation. Since the processes may be executed in parallel, it is possible to reduce overhead and reduce a time period for the processes.

### [Embodiment 8]

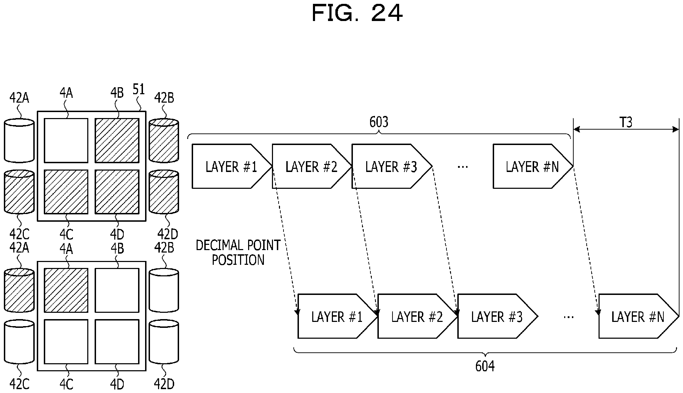

Embodiment 8 is described below. A server 1 according to the present embodiment has the configuration illustrated in FIG. 20. FIG. 24 is a diagram describing an operation procedure according to Embodiment 8. In the present embodiment, since each of the accelerators 51 to 54 operates in the same manner as the other accelerators, the accelerator 51 is described below as an example.

The upper side of FIG. 24 indicates the preceding operation described in Embodiment 4 and to be executed in each of layers #1 to #N, while the lower side of FIG. 24 indicates the main operation described in Embodiment 4 and to be executed in each of the layers #1 to #N. Operation circuits that are among the operation circuits 4A to 4D included in the accelerators 51 corresponding to the upper and lower sides of FIG. 21 and are indicated by diagonal lines execute the operations.

Data RAMs 42A to 42D illustrated in FIG. 24 are memories included in the respective operation circuits 4A to 4D, but are illustrated separately from the operation circuits 4A to 4D in FIG. 24 to clearly understand the following description. Each of the data RAMs 42A to 42D may read and write data from and to any of the operation circuits 4A to 4D.

The overall managers 100 of the controllers 10 included in the operation circuits 4B to 4D instruct the operation sections 12 of the operation circuits 4B to 4D to execute the preceding operation using the N% operation data for each of the layers #1 to #N. The overall managers 100 of the controllers 10 included in the operation circuits 4B to 4D acquire operation results, calculated by the operation sections 12, of executing the preceding operation using the N% operation data from the data RAMs 42B to 42D included in the operation circuits 4B to 4D to which the overall managers 100 belong. The overall managers 100 of the controllers 10 included in the operation circuits 4B to 4D cause the operation results, calculated by the operation sections 12 of the operation circuits 4B to 4D, of executing the preceding operation using the N% operation data to be stored in the data RAM 42A included in the operation circuit 4A.

The decimal point position determiners 101 of the controllers 10 included in the operation circuits 4B to 4D acquire, from the statistical information storage section 115 of the operation circuit 4A, statistical information of the operation results, calculated by the operation sections 12, of executing the preceding operation using the N% operation data. The decimal point position determiners 101 determine optimal decimal point positions using the acquired statistical information. The decimal point position determiners 101 output the determined decimal point positions to the index value conversion controllers 102 of the controllers 10 included in the operation circuits 4B to 4D to which the decimal point position determiners 101 belong. The decimal point position determiners 101 of the controllers 10 included in the operation circuits 4B to 4D determine decimal point positions in the layers #1 to #N and output the determined decimal point positions.

The index value conversion controllers 102 of the controllers 10 included in the operation circuits 4B to 4D notify the decimal point positions determined by the decimal point position determiners 101 of the controllers 10 included in the operation circuits 4B to 4D to the controller 10 of the operation circuit 4A.

The operation sections 12 of the operation circuits 4B to 4D execute the preceding operation using the N% operation data in each of the layers #1 to #N. The operation sections 12 of the operation circuits 4B to 4D cause the operation results of the preceding operation to be stored in the data RAMs 42B to 42D included in the operation circuits 4B to 4D to which the operation sections 12 belong. Therefore, the operation sections 12 of the operation circuits 4B to 4D may pipeline the preceding operation for each of the layers #1 to #N.

The controller 10 of the operation circuit 4A receives, from the index value conversion controllers 102 of the controllers 10 included in the operation circuits 4B to 4D, the notifications of the decimal point positions in each of the layers #1 to #N. The overall manager 100 of the controller 10 of the operation circuit 4A instructs the index value conversion controller 102 to output the acquired decimal point positions. The overall manager 100 of the operation circuit 4A instructs the operation section 12 of the operation circuit 4A to update the decimal point positions of the operation results of executing the preceding operation using the decimal point positions output from the index value conversion controller 102. The overall manager 100 of the operation circuit 4A instructs the operation section 12 of the operation circuit 4A to use the same decimal point positions to execute the main operation using (100 - N)% operation data items excluding the operation data item used for the preceding operation.

The index value conversion controller 102 of the controller 10 of the operation circuit 4A outputs the acquired decimal point positions to the operation section 12 of the operation circuit 4A.

The operation section 12 of the operation circuit 4A acquires the operation results of the preceding operation from the data RAM 42A included in the operation circuit 4A. The operation section 12 of the operation circuit 4A uses the decimal point positions input from the index value conversion controller 102 to update the decimal point positions of the preceding operation results that have been acquired in each of the layers #1 to #N to the specified decimal point positions. For example, the operation section 12 of the operation circuit 4A quantizes the preceding operation results. The operation section 12 of the operation circuit 4A uses the decimal point positions input from the index value conversion controller 102 to execute the main operation on the (100 - N)% operation data items. Therefore, the operation section 12 of the operation circuit 4A may pipeline, for each of the layers #1 to #N, the quantization of the N% operation data and the operation that includes the operation to be executed using the (100 - N)% operation data items and is to be executed using the decimal point positions determined based on the statistical information obtained from the preceding operation.

In this case, the operation section 12 of the operation circuit 4A may execute, in parallel with a process 603 of pipelining the preceding operation to be executed by the operation section 12 of the operation circuit 4A, a process 604 of pipelining the operation to be executed using the decimal point positions determined based on the statistical information obtained from the preceding operation. Therefore, a time period T3 that causes overhead for the operation process in the deep learning corresponds to a single layer in which a process is executed for the longest time period among time periods for processes in the layers.

The number of operation circuits 4 that execute the preceding operation is larger than the number of operation circuits 4 that quantize a result of the preceding operation and execute the operation on the remaining operation data items. It is, therefore, preferable that the ratio of the operation data item to be used for the preceding operation be higher than the ratio of the remaining operation data items.

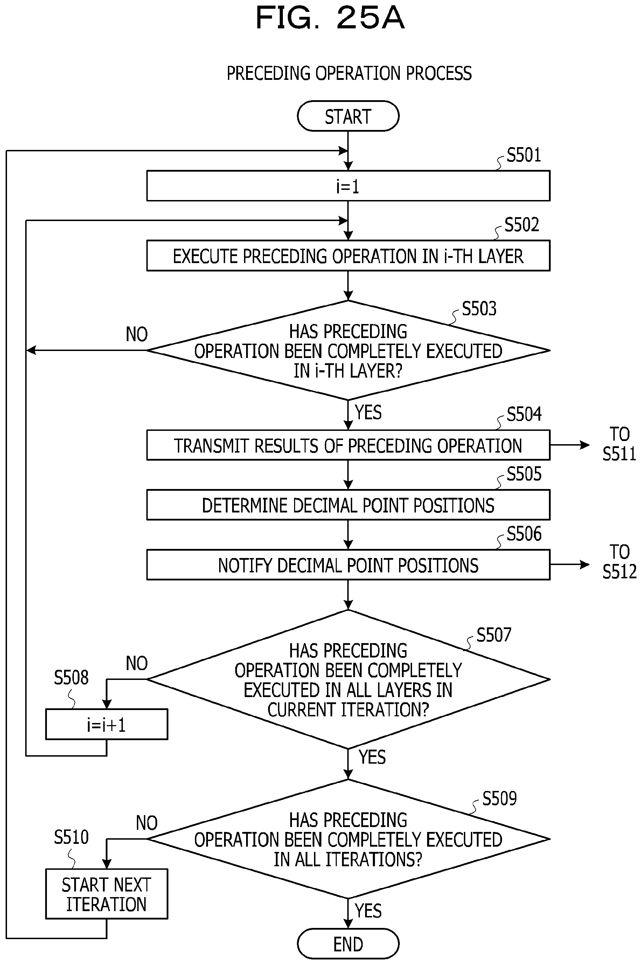

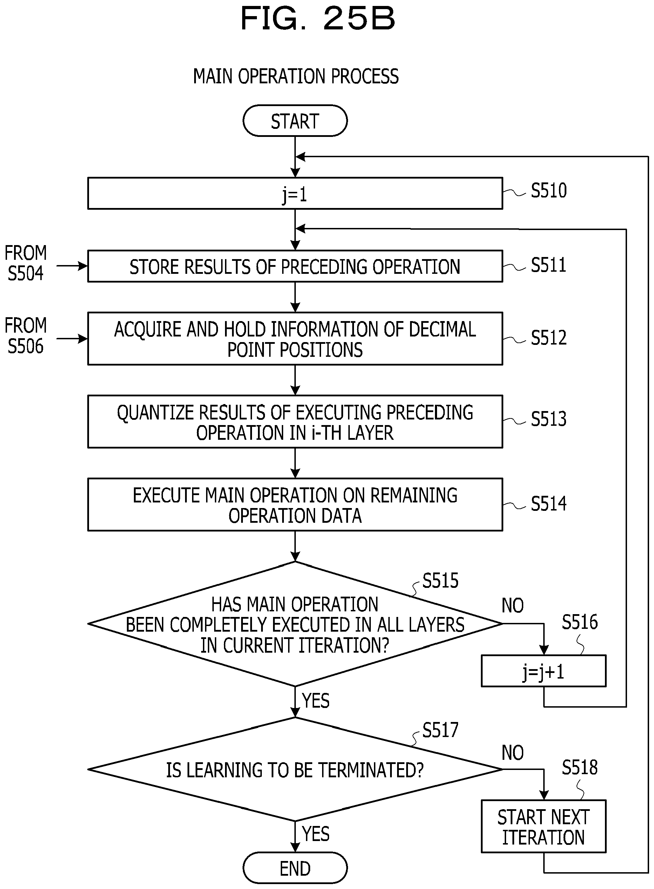

FIG. 25A to 25B describe the flow of an operation process in the deep learning by the server 1 according to the present embodiment. FIG. 25A to 25B is a flowchart of the operation process in the deep learning by the server according to Embodiment 8.

The overall managers 100 of the operation circuits 4B to 4D set, to 1, i indicating a number of a layer in which the preceding operation is being executed (step S501).

The overall managers 100 of the operation circuits 4B to 4D instruct the operation section 12 of the operation circuit 4A to execute the preceding operation using the N% operation data in the i-th layer. The operation sections 12 of the operation circuits 4B to 4D execute the preceding operation using the N% operation data in the i-th layer (step S502).

The overall managers 100 of the operation circuits 4B to 4D determine whether the preceding operation has been completely executed in the i-th layer (step S503). When the preceding operation has not been completely executed (No in step S503), the preceding operation process returns to step S502.

On the other hand, when the preceding operation has been completely executed (Yes in step S503), the overall managers 100 of the operation circuits 4B to 4D transmit operation results of the preceding operation to the data RAM 42A included in the operation circuit 4A (step S504).

The decimal point position determiners 101 of the operation circuits 4B to 4D determine appropriate decimal point positions using statistical information obtained from the operation results of the preceding operation (step S505).

The index value conversion controllers 102 of the operation circuits 4B to 4D notify the decimal point positions determined by the decimal point position determiners 101 to the controller 10 of the operation circuit 4A (step S506).

The overall managers 100 of the operation circuits 4B to 4D determine whether the preceding operation has been completely executed in all the layers in a current iteration that is being executed (step S507). When a layer in which the preceding operation has not been completely executed remains in the current iteration (No in step S507), the overall managers 100 of the operation circuits 4B to 4D increment i by 1 (step S508). The preceding operation process returns to step S502.

On the other hand, when the preceding operation has been completely executed in all the layers in the current iteration (Yes in step S507), the overall managers 100 of the operation circuits 4B to 4D determine whether the preceding operation has been completely executed in all iterations (step S509). When the preceding operation has not been completely executed in one or more of all the iterations (No in step S509), the overall managers 100 of the operation circuits 4B to 4D start the next iteration (step S510) and the preceding operation process returns to step S501.

On the other hand, when the preceding operation has been completely executed in all the iterations (Yes in step S509), the overall managers 100 of the operation circuits 4B to 4D terminate the preceding operation process in the deep learning.

The overall manager 100 of the operation circuit 4A sets, to 1, j indicating a number of a layer in which the main operation is being executed (step S510).

The data RAM 42A of the operation circuit 4A stores the results, transmitted by the overall managers 100 of the operation circuits 4B to 4D, of executing the preceding operation in each of the layers (step S511).

The index value conversion controller 102 of the operation circuit 4A acquires and holds the decimal point positions calculated in the layers and transmitted by the index value conversion controllers 102 of the operation circuits 4B to 4D (step S512). The index value conversion controller 102 of the operation circuit 4A receives, from the overall manager 100, an instruction to output the decimal point positions for each of the layers and outputs, to the operation section 12, the decimal point positions to be used for the layers.

The operation section 12 of the operation circuit 4A receives input of the decimal point positions from the index value conversion controller 102 for each of the layers. The operation section 12 of the operation circuit 4A acquires the preceding operation results from the data RAM 42A. The operation section 12 of the operation circuit 4A quantizes the preceding operation results using the acquired decimal point positions (step S513).

The operation section 12 of the operation circuit 4A uses the acquired decimal point positions to execute the main operation on the (100 - N)% operation data items (step S514).

The overall manager 100 of the operation circuit 4A determines whether the main operation has been completely executed in all the layers in the current iteration (step S515). When a layer in which the main operation has not been completely executed remains in the current iteration (No in step S515), the overall managers 100 of the operation circuits 4B to 4D increment j by 1 (step S516). The main operation process returns to step S511.

On the other hand, when the main operation has been completely executed in all the layers in the current iteration (Yes in step S515), the overall manager 100 of the operation circuit 4A determines whether the learning is to be terminated (step S517). When the learning is not to be terminated (No in step S517), the overall manager 100 of the operation circuit 4A starts the next iteration (step S518) and the preceding operation process returns to step S511.

On the other hand, when the learning is to be terminated (Yes in step S517), the overall manager 100 of the operation circuit 4A terminates the main operation process in the deep learning.

The present embodiment describes the case where the operation circuits 4B to 4D execute the preceding operation using some of the input data. The operation circuits 4B to 4D, however, may execute the preceding operation using all the input data. In this case, the operation circuit 4A terminates the operation by quantizing operation results of the preceding operation.

As described above, the server according to the present embodiment includes the accelerators, each of which includes the plurality of operation circuits. Each of the accelerators causes a single operation circuit to execute the preceding operation to determine an appropriate decimal point position based on statistical information of the preceding operation and stores an operation result of the preceding operation in a memory. The remaining accelerators quantize the results of the preceding operation using the determined decimal point positions and execute the operation using the decimal point positions determined based on the statistical information obtained from the preceding operation. This may pipeline the preceding operation and the operation to be executed using the decimal point positions determined based on the statistical information obtained from the preceding operation. Since the processes may be executed in parallel, it is possible to reduce overhead and reduce process time periods.

### [Embodiment 9]

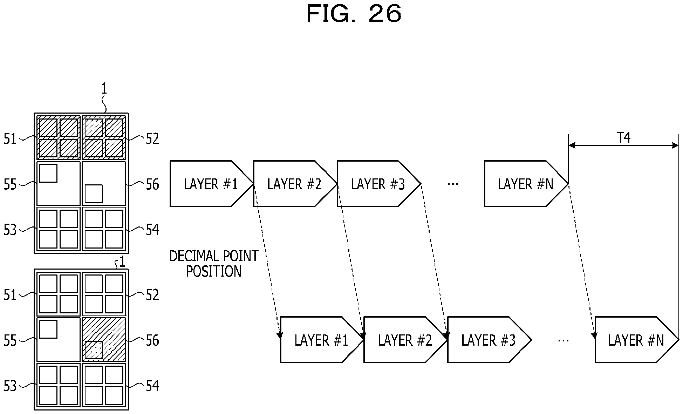

Embodiment 9 is described below. A server 1 according to the present embodiment has the configuration illustrated in FIG. 20. The server 1 according to the present embodiment uses the accelerators 51 and 52 to execute the preceding operation and uses the accelerator 56 to execute the main operation. This feature is different from Embodiment 8. The accelerator 56 is the reduced-version LSI. FIG. 26 is a diagram describing an operation procedure according to Embodiment 9.

A processing load of quantization using a preceding operation according to the present embodiment is low. By increasing the ratio of an operation data item to be used for the preceding operation, a processing load of an operation to be executed on remaining operation data may be suppressed. Therefore, a process time period for the quantization using the preceding operation by each of the accelerators 55 and 56 and the execution of the operation on the remaining operation data items is not long.

The accelerators 51 and 52 play the same roles as those of the operation circuits 4B to 4D described in Embodiment 8. For example, the accelerators 51 and 52 execute the preceding operation in each of the layers #1 to #N, store operation results of the preceding operation, and determine an appropriate decimal point position using statistical information obtained from the operation results. The accelerators 51 and 52 output the determined decimal point position to the accelerator 56. This may pipeline the preceding operation to be executed by the accelerators 51 and 52.

The accelerator 56 plays the same role as that of the operation circuit 4A described in Embodiment 8. For example, the accelerator 56 acquires the decimal point position determined by the accelerators 51 and 52 and uses the decimal point position to quantize a result of executing the preceding operation in each of the layers #1 to #N and execute the main operation on the remaining operation data. This may pipeline the quantization and the main operation that are to be executed by the accelerator 56 using the decimal point position determined by the accelerators 51 and 52.

In this case, the accelerator 56 may execute the pipelined operation using the determined decimal point position in parallel with the pipelined preceding operation executed by the accelerators 51 and 52. Therefore, a time period T4 that causes overhead for the operation process in the deep learning corresponds to a single layer in which a process is executed for the longest time period among time periods for processes in the layers.

The present embodiment describes the case where the accelerators 51 and 52 execute the preceding operation using some of the input data. The accelerators 51 and 52, however, may execute the preceding operation using all the input data. In this case, the accelerator 56 terminates the operation by quantizing an operation result of the preceding operation.

As described above, the server according to the present embodiment uses the accelerators with sufficient processing performance to calculate a result of the preceding operation and determine an appropriate decimal point position. The server uses the decimal point position determined based on the operation result to cause the accelerators with low processing performance to quantize the preceding operation result and execute the operation using the remaining operation data items. This may pipeline the preceding operation and the main operation. Since the processes may be executed in parallel, it is possible to reduce overhead and reduce a time period for the processes.

## Claims

1. An arithmetic processing device comprising:
an operation unit configured to execute a predetermined operation;
a manager configured to calculate statistical information of a first operation result by causing to execute the predetermined operation using input data as a first fixed-point number with a first decimal point at a first decimal point position;
a decimal point position determiner configured to determine a second decimal point position using the statistical information; and
an index value conversion controller configured to causes the operation unit to calculate a second operation result when the predetermined operation is executed using the input data as a second fixed-point number with a second decimal point at the second decimal point position.

2. The arithmetic processing device according to claim 1, wherein
the index value conversion controller executes a first process acquiring the second operation result by causing the operation unit to execute the predetermined operation using the input data as the second fixed-point number.

3. The arithmetic processing device according to claim 2, wherein
the operation unit includes a first operation unit and a second operation unit,
the manager causes the first operation unit to execute the predetermined operation using the input data as the first fixed-point number, and
the index value conversion controller causes the second operation unit to execute the predetermined operation using the input data as the second fixed-point number.

4. The arithmetic processing device according to claim 1, further comprising:
a memory configured to store the first operation result, wherein
the index value conversion controller executes a second process acquiring the second operation result by causing the operation unit to convert the first operation result stored in the memory into the second fixed-point number with the second decimal point at the second decimal point position.

5. The arithmetic processing device according to claim 4, wherein
the operation unit includes a first operation unit and a second operation unit,
the manager causes the second operation unit to execute the predetermined operation using the input data as the first fixed-point number with the first decimal point at the first decimal point position, and
the index value conversion controller causes the first operation unit to execute a process of converting the first operation result stored in the memory into the second fixed-point number with the second decimal point at the second decimal point position.

6. The arithmetic processing device according to claim 1, further comprising:
a memory configured to store the first operation result,
the index value conversion controller selects a process to be executed for a shorter time period from a first process and a second process, the first process acquiring the second operation result by causing the operation unit to execute the predetermined operation using the input data as the second fixed-point number with the second decimal point at the second decimal point position, the second process acquiring the second operation result by causing the operation unit to convert the first operation result stored in the memory into the second fixed-point number with the second decimal point at the second decimal point position and executes the selected process.

7. The arithmetic processing device according to claim 6, wherein the index value conversion controller selects, based on the type of the predetermined operation, the process to be executed for a shorter time period from the first process and the second process.

8. The arithmetic processing device according to claim 2, 3, or 6, wherein
the index value conversion controller inputs first operation data to the operation unit, causes the operation unit to execute the predetermined operation using the first operation data as the first fixed-point number with the first decimal point at the first decimal point position, and acquires the statistical information, the first operation data being a part of a plurality of operation data items included in the input data.

9. The arithmetic processing device according to claim 4, 5, or 7, wherein
the manager inputs first operation data to the operation unit, causes the operation unit to execute the predetermined operation using the first operation data as the first fixed-point number with the first decimal point at the first decimal point position and calculate the first operation result, and acquires the statistical information, the first operation data being a part of a plurality of operation data items included in the input data, and
when the second process is executed, the index value conversion controller converts the first operation result into the second fixed-point number with the second decimal point at the second decimal point position, inputs second operation data included in the input data and excluding the first operation data to the operation section, causes the operation section to execute the predetermined operation using the second operation data as the second fixed-point number with the second decimal point at the second decimal point position, and acquires the second operation result.

10. The arithmetic processing device according to claim 8 or 9, wherein
the manager changes a ratio of the first operation data to the input data.

11. An arithmetic processing method comprising:
calculating statistical information of a first operation result by causing to execute a predetermined operation using input data as a first fixed-point number with a first decimal point at a first decimal point position;
determining a second decimal point position using the statistical information; and
calculating a second operation result when the predetermined operation is executed using the input data as a second fixed-point number with a second decimal point at the second decimal point position.

12. An arithmetic processing program comprising:
calculating statistical information of a first operation result by causing to execute a predetermined operation using input data as a first fixed-point number with a first decimal point at a first decimal point position;
determining a second decimal point position using the statistical information; and
calculating a second operation result when the predetermined operation is executed using the input data as a second fixed-point number with a second decimal point at the second decimal point position.
